# FASCICULE DE BREVET EUROPEEN

(11) **EP 0 496 684 B1**
(45) Date de publication et mention de la délivrance du brevet: **07.10.1998**
(21) Numéro de dépôt: 92420024.9
(22) Date de dépôt: 22.01.1992
(51) Int. Cl.: G01N 1/28, H05B 6/80

(54) **Appareil de traitement en milieu humide simultanément sur une pluralité d'échantillons et utilisation dudit appareil**
Vorrichtung zur gleichzeitigen Nassbehandlung von mehreren Proben und ihre Verwendung
Apparatus for the simultaneous wet processing of a plurality of samples, and use of the apparatus

(30) Priorité: 25.01.1991 FR 9101064; 17.09.1991 FR 9111706
(43) Date de publication de la demande: 29.07.1992
(73) Titulaire: SOCIETE PROLABO, 94120 Fontenay-sous-Bois (FR)
(72) Inventeur: Baudet, Jean-Jacques, F-45250 Briare (FR); Jacquault, Patrick, F-92310 Sevres (FR)
(74) Mandataire: Ahner, Francis

(56) Documents cités:
- EP-A- 89 705
- EP-A- 156 742
- EP-A- 387 161
- FR-A- 2 250 254
- GB-A- 2 081 442

## Description

La présente invention concerne un appareil pour réaliser un traitement en milieu humide simultanément sur une pluralité d'échantillons, l'appareil mettant en oeuvre un chauffage par micro-ondes des échantillons. Fait également partie de l'invention l'utilisation de l'appareil pour la réalisation de réactions chimiques sur des échantillons qui peuvent être un composé minéral, organique ou organométallique ou un mélange de composés.

On a déjà décrit notamment dans le brevet européen délivré sous le n° 156 742 un appareil et un procédé destinés à réaliser une réaction chimique en milieu humide sur une série d'échantillons, les échantillons étant préalablement préparés et introduits dans des matras placés dans les logements d'un carrousel, les matras sont ensuite amenés dans la cavité d'application des micro-ondes d'un générateur de micro-ondes. Un tel appareil est commercialisé par la Société PROLABO sous la référence MICRODIGEST 300. Cet appareil convient bien pour traiter individuellement des échantillons.

Au laboratoire, on a cependant parfois besoin de pouvoir réaliser simultanément des traitements en milieu humide dans des conditions de température et de temps identiques, sur plusieurs échantillons, c'est-à-dire sur une pluralité d'échantillons.

Il a été proposé tel que décrit dans le brevet anglais GB 2 081 442 de réaliser un four à chauffage par micro-ondes qui délimite une cavité d'application apte à contenir plusieurs récipients suspendus par leur col.

Un tel appareil permet effectivement de traiter simultanément divers échantillons dans les mêmes conditions de température et de temps de réaction mais ne permet pas un accès aisé des récipients à l'opérateur, par exemple pour introduire un réactif supplémentaire ou contrôler de visu l'avancement des réactions. Pour ce faire, l'opérateur doit, après arrêt du générateur de micro-ondes, ouvrir la porte frontale du four et l'accès aux récipients n'est ensuite pas facile. De plus dans un tel appareil, tout le récipient est chauffé, notamment son col, et non seulement la partie contenant l'échantillon à traiter.

Un but de l'invention est un appareil pour réaliser un traitement en milieu humide simultanément sur une pluralité d'échantillons.

Un autre but de l'invention est un appareil pour réaliser un traitement en milieu humide, les calories étant apportées par un chauffage au moyen de micro-ondes, pour lequel l'accès aux récipients contenant les échantillons est particulièrement aisé pour l'opérateur.

Il a maintenant été trouvé, et c'est l'objet de la présente invention, un appareil de traitement en milieu humide tel que décrit dans la revendication 1.

Un échantillon placé dans un récipient est soumis aux micro-ondes pour effectuer un chauffage rapide de celui-ci par exemple pour réaliser une réaction chimique et/ou une opération physique en milieu humide sur l'échantillon.

A titre d'exemples, dans un tel appareil on peut réaliser des réactions chimiques telles que minéralisation, décomposition, hydrolyse... ou des opérations physiques telles que dissolution, cristallisation, évaporation, fusion... ou encore combiner sur un même échantillon une opération physique et une réaction chimique.

Dans le présent texte :
- par "échantillon" on entend, par commodité, le contenu du récipient, ainsi selon la réaction chimique et/ou l'opération physique effectuée le récipient, placé dans la cavité d'application de micro-ondes peut contenir en tant qu'échantillon un produit ou un mélange de produits et éventuellement un ou plusieurs réactifs.
- par "échantillon" on entend également une quantité définie de produit placée dans un récipient ayant une capacité de rétention, soit un produit en écoulement sous forme d'un flux continu dans un récipient de forme tubulaire,
- par "une pluralité d'échantillons" on entend que plusieurs échantillons sont placés respectivement dans plusieurs récipients, c'est-à-dire que chaque échantillon est placé avec un ou plusieurs réactifs dans un récipient, les échantillons peuvent être différents ou tous identiques et associés ou non à des réactifs également différents ou tous identiques,
- par "en milieu humide" on entend que l'échantillon contient un liquide, qu'il est par exemple lui-même sous la forme d'un liquide, d'un mélange liquide/solide, d'une suspension liquide/liquide...

Dans des récipients de forme tubulaire on peut aussi, comme il sera décrit ci-après, réaliser des traitements en milieu humide simultanément sur une succession d'échantillons, des échantillons de volume défini étant alors successivement alimentés dans chaque récipient au moyen de vannes ou bien encore les échantillons alimentés dans chaque récipient étant séparés par des bulles de gaz (par exemple de l'air), les échantillons séparés par les bulles étant en écoulement sous forme d'un flux continu dans le récipient tubulaire.

Selon un mode de réalisation, la cavité d'application est un cylindre dont la directrice est un polygone avantageusement régulier.

De préférence, la cavité d'application est un cylindre régulier dont la directrice est un cercle.

Selon une variante, un tel appareil comporte au moins un guide d'ondes qui présente un axe de symétrie Y parallèle à l'axe X de la cavité d'application.

Selon une autre variante, un tel appareil comporte un guide d'ondes dont l'axe de symétrie Y est confondu avec l'axe X de la cavité d'application.

Selon encore une autre variante, un tel appareil comporte au moins un guide d'ondes qui présente un axe de symétrie Y orthogonal à l'axe X de la cavité d'application.

Selon une autre variante, un tel appareil comporte au moins un guide d'ondes dont l'axe de symétrie Y est parallèle à l'axe X de la cavité d'application et au moins un guide d'ondes dont l'axe de symétrie Y est orthogonal à l'axe X de la cavité d'application.

L'appareil de traitement en milieu humide, objet de l'invention, peut bien sûr comporter à la fois au moins un émetteur de micro-ondes dont l'antenne est située dans la cavité d'application et au moins un ensemble constitué par un générateur de micro-ondes émettant dans un guide d'ondes.

L'appareil, selon l'invention, peut comporter plusieurs ensembles constitués par un générateur de micro-ondes émettant dans un guide d'ondes. Selon un mode de réalisation d'un tel appareil, les ensembles sont disposés, par rapport à la cavité d'application des micro-ondes, de façon telle que les axes de symétrie des guides d'ondes orthogonaux à l'axe X de la cavité d'application soient situés dans un même plan et soient sécants ou parallèles afin que les ouvertures des guides d'ondes dans la paroi latérale de la cavité d'application soient décalées.

Selon un autre mode de réalisation, les ensembles sont disposés, par rapport à la cavité d'application des micro-ondes de façon telle que les axes de symétrie des guides d'ondes soient situés à des altitudes différentes afin que les ouvertures des guides d'ondes dans la paroi latérale de la cavité d'application soient décalées.

Selon ce mode de réalisation, les axes de symétrie des guides d'ondes peuvent être situés dans un même plan vertical et/ou dans des plans verticaux parallèles et/ou sécants.

Par ces dispositions les ouvertures des guides d'ondes dans la paroi latérale de la cavité d'application ne sont jamais face à face.

Selon un autre mode de réalisation, chaque guide d'ondes est disposé par rapport à la cavité d'application de façon telle que son axe est perpendiculaire à l'axe X de la cavité d'application.

Ainsi pour une cavité d'application cylindrique dont la directrice est un cercle, chaque guide d'ondes peut être disposé radialement par rapport à la cavité d'application ou être disposé perpendiculairement à un plan radial de la cavité d'application des micro-ondes.

Selon encore un autre mode de réalisation, la cavité d'application de l'appareil selon l'invention, est telle que la paroi supérieure de la cavité d'application est constituée d'une zone périphérique annulaire solidaire de la paroi latérale et d'une zone centrale comportant les ouvertures.

Selon une variante, la zone centrale amovible est circulaire et admet comme axe l'axe X de la cavité d'application. Une zone centrale circulaire peut être animée d'un mouvement de rotation.

Selon un autre mode de réalisation, la paroi supérieure de la cavité d'application peut être indépendante de la paroi latérale et être animée d'un mouvement de rotation autour de l'axe X de la cavité d'application.

Une zone centrale circulaire ou une paroi supérieure indépendante de la paroi latérale permettent, lorsqu'elles sont animées d'un mouvement de rotation autour de l'axe X de la cavité d'application, de soumettre tous les échantillons présents dans les récipients à la même quantité de micro-ondes.

La zone centrale ou la paroi supérieure peuvent être animées en rotation par tous moyens connus. Elles peuvent être entraînées par friction au moyen d'un galet tournant ou d'une courroie, elles peuvent aussi être entraînées au moyen d'une roue dentée ou d'une chaîne, la zone centrale ou la paroi supérieure étant alors pourvue de moyens coopérant avec le galet ou la courroie ou la roue dentée ou la chaîne.

Une telle disposition apporte une certaine homogénéité de la répartition des micro-ondes dans la cavité d'application, même si les appareils, selon l'invention, comportent d'une manière connue en soi, des moyens d'agitation d'ondes, tels qu'un brasseur d'ondes.

Les récipients destinés à contenir les échantillons sont réalisés en un matériau perméable aux micro-ondes, ils sont par exemple en verre, matière plastique... Leur forme n'est pas critique, leurs dimensions sont choisies afin qu'ils puissent pénétrer dans la cavité d'application d'une part, par la cheminée, et d'autre part, par l'ouverture de la paroi supérieure de la cavité d'application. Les récipients comportant un col allongé, tels que éprouvettes, matras, ampoules, habituellement utilisés au laboratoire conviennent bien.

Eventuellement afin de réaliser, dans au moins un récipient, avec l'appareil objet de l'invention, un traitement en milieu humide sur un échantillon s'écoulant selon un flux continu, ou sur une succession d'échantillons, le récipient peut être constitué par un tube, ouvert à ses deux extrémités afin de permettre l'écoulement en continu du flux d'échantillon ou de la succession d'échantillons.

Selon un autre mode de réalisation le récipient peut être constitué par un tube enroulé en hélice dont les caractéristiques ont été déterminées pour que le temps de séjour de l'échantillon dans la cavité d'application soit suffisant.

Les modes de réalisation d'un appareil comportant de tels récipients seront décrits ultérieurement.

Pour les récipients comportant un col, le col des récipients est avantageusement pourvu à sa partie supérieure d'un bourrelet extérieur, destiné à reposer sur le bord supérieur de la cheminée afin de maintenir le récipient suspendu. Si le col du récipient ne comporte pas de bourrelet extérieur et/ou si sa section est inférieure à la section interne de la cheminée, on peut placer un adaptateur entre le col et la cheminée.

La cheminée est tubulaire, de forme cylindrique, de section constante. Elle s'élève sur une hauteur H choisie en fonction de la section de passage de l'ouverture dans la paroi supérieure de la cavité d'application et de la fréquence d'émission des micro-ondes de manière à constituer une barrière d'absorption s'opposant à la propagation des micro-ondes à l'extérieur de la cavité d'application.

La cheminée assure, outre une fonction de barrière de propagation des micro-ondes, une fonction de suspension du récipient. Si le col du récipient est trop long par rapport à la hauteur H de la cheminée, on peut placer une entretoise entre le bourrelet extérieur du récipient et le bord supérieur de la cheminée. La hauteur de l'entretoise sera bien sûr choisie de façon telle que la partie du récipient contenant l'échantillon soit placée dans la cavité d'application des micro-ondes.

La cheminée peut être toute située au dessus de la paroi supérieure de la cavité d'application des micro-ondes, elle peut aussi être, au moins en partie, située à l'intérieur de la cavité d'application. Cependant, en aucun cas la cheminée ne peut avoir une hauteur H inférieure à la hauteur H précisée ci-avant.

La cheminée peut être réalisée en tout matériau conducteur mis sous forme continue telle qu'une tôle, ou mis sous forme discontinue telle qu'une grille, un treillis, un tissus, une tôle perforée.

Pour les appareils, objets de l'invention, destinés à recevoir des récipients comportant un col, avantageusement, chaque cheminée est prolongée, à sa partie située dans la cavité d'application, par une gaine perméable aux micro-ondes et fermée à son extrémité basse, ceci afin d'éviter la chute de débris du récipient et de l'échantillon dans la cavité d'application lors de la rupture d'un récipient.

De préférence, la gaine est indépendante de la cheminée, ainsi, selon ce mode de réalisation dans chaque cheminée est placée une gaine perméable aux micro-ondes, fermée à son extrémité basse, ladite gaine dépassant de la cheminée dans la cavité d'application et comportant à sa partie haute un moyen de retenue coopérant avec le bord supérieur de la cheminée. Selon le présent mode de réalisation, le récipient s'appuie sur le bord supérieur de la gaine directement ou au moyen d'un adaptateur.

Afin de réguler la température des cheminées, donc la température des cols des récipients, chaque cheminée peut comporter une chambre annulaire entourant la cheminée dans sa partie située au-dessus de la paroi supérieure de la cavité d'application, ladite chambre étant pourvue de moyens d'entrée et de sortie de fluide.

Le fluide destiné à circuler dans la chambre annulaire est, par exemple, de l'eau.

Afin de capter les fumées ou les vapeurs produites par le traitement en milieu humide l'appareil, objet de l'invention, peut comporter une pluralité de bouchons adaptables à chaque ouverture de récipient, chaque bouchon comportant un passage relié à un moyen d'aspiration et/ou de neutralisation des produits gazeux émis par l'échantillon lors du traitement.

Les bouchons peuvent être des bouchons introduits dans les cols des récipients ou être réalisés en matériau élastique et s'adapter aux cols des récipients extérieurement.

Pour des récipients constitués par un tube ouvert à ses deux extrémités et destinés au traitement d'échantillons s'écoulant en continu, le tube peut comporter, en amont par rapport au sens de l'écoulement, et dans sa partie extérieure à la cheminée, une dérivation destinée à l'adaptation d'un bouchon, tel que ci-avant, au récipient.

Afin que dans le récipient tout le volume de l'échantillon soit soumis aux micro-ondes d'une façon homogène, l'appareil objet de l'invention peut être tel qu'il comporte des moyens pour animer au moins un récipient d'un mouvement de rotation sur lui-même, autour d'un axe parallèle à l'axe X de la cavité d'application.

Le récipient peut être animé d'un mouvement de rotation sur lui-même par entraînement direct par exemple par friction à l'aide d'un galet tournant ou d'une courroie entraînée et entourant en partie le récipient.

Le récipient peut être animé d'un mouvement de rotation sur lui même par entraînement indirect, c'est-à-dire par entraînement en rotation de la gaine placée dans la cheminée ou de la cheminée elle-même, le récipient reposant sur le bord supérieur de la gaine ou de la cheminée directement ou au moyen d'un adaptateur. La gaine ou la cheminée peuvent être entraînées en rotation directement, comme ci-avant pour le récipient, par exemple par friction.

Selon un autre mode de réalisation, afin de réaliser dans chaque récipient un traitement en milieu humide sur une succession d'échantillons chaque récipient fait partie d'un circuit comportant une chambre de traitement constituée par le récipient, et en se référant au sens de déplacement de l'échantillon dans le circuit, en amont de la chambre de traitement, un conduit d'alimentation d'échantillons, éventuellement un conduit d'introduction d'au moins un liquide qui peut être un réactif, un conduit d'alimentation de liquide de rinçage, et, en aval de la chambre de traitement, un conduit de sortie du produit du traitement, chaque conduit étant muni d'une vanne.

Ci-avant on a précisé que, en se référant au sens de déplacement de l'échantillon dans le circuit on trouve, en amont de la chambre de traitement, un conduit d'alimentation d'échantillons, éventuellement au moins un conduit d'introduction d'un liquide par exemple d'un réactif et un conduit d'alimentation de liquide de rinçage. Il est bien entendu que l'ordre d'énumération des divers conduits ne présume en rien de leurs positions respectives, cela signifie seulement que l'échantillon, éventuellement le liquide et le liquide de rinçage sont introduits dans le circuit en amont de la chambre de traitement.

Ces conduits, chacun étant muni d'une vanne, peuvent déboucher individuellement dans le circuit, ils peuvent aussi être en parallèle et reliés à un conduit commun qui assure la liaison avec le circuit.

L'appareil peut comporter un seul conduit d'introduction de liquide, il peut bien sûr comporter, par exemple pour la réalisation de réactions chimiques plusieurs conduits d'introduction de plusieurs réactifs, ces conduits peuvent déboucher individuellement dans le circuit, ils peuvent aussi être en parallèle et reliés à un conduit commun qui assure la liaison avec le circuit.

Le liquide de rinçage peut être, par exemple de l'eau, il peut aussi être le liquide utilisé pour réaliser le traitement en milieu humide.

Selon un mode de réalisation, l'appareil objet de l'invention, peut comporter en amont de la chambre de traitement un conduit d'alimentation d'un étalon, éventuellement muni d'une vanne. Ce conduit peut rejoindre le conduit d'alimentation d'échantillons en aval de sa vanne.

Selon le procédé pour réaliser un traitement en milieu humide, selon l'invention, on alimente une quantité prédéterminée d'échantillon dans le circuit. La ligne d'échantillonnage peut ainsi comporter des moyens pour déterminer un volume ou une masse d'échantillon à traiter, notamment lorsque celui-ci est sous forme solide.

Selon un autre mode de réalisation l'appareil selon l'invention peut être tel que au moins deux récipients sont reliés en série par un raccord. Le raccord peut comporter des moyens de transfert de l'échantillon d'un récipient à l'autre récipient, constitués par exemple par une pompe. Eventuellement, le raccord entre deux récipients peut aussi comporter des moyens d'introduction d'un réactif dans l'échantillon transféré d'un récipient à l'autre.

L'appareil, objet de l'invention, peut être destiné à réaliser un traitement en milieu humide sur un flux continu d'échantillon. L'appareil est alors tel que le récipient est constitué par un tube ouvert à ses deux extrémités et la paroi inférieure de la cavité d'application comporte en outre une pluralité d'ouvertures pour le passage des récipients, chaque ouverture étant pourvue d'une cheminée d'une hauteur H fonction de la fréquence d'émission des micro-ondes et de la section de passage de l'ouverture pour former une barrière d'absorption des micro-ondes.

Un appareil dont le récipient est constitué par un tube ouvert à ses deux extrémités est particulièrement destiné à la réalisation d'appareil dont au moins deux récipients sont reliés en série. Ainsi, par exemple, un premier récipient sera relié par sa partie basse à la partie basse d'un deuxième récipient au moyen d'un raccord et le deuxième récipient sera relié par sa partie haute à la partie haute d'un troisième récipient par un autre raccord et ainsi de proche en proche.

L'échantillon peut circuler dans les récipients sous l'effet de moyens d'introduction sous pression situés en amont du premier récipient, ou de moyens d'aspiration situés en aval du dernier récipient parcouru.

Comme pour les cheminées entourant les ouvertures situées dans la paroi supérieure, les cheminées entourant les ouvertures situées dans la paroi inférieure peuvent être au moins en partie situées à l'intérieur de la cavité d'application des micro-ondes.

Dans un tel appareil, chaque récipient peut être entouré d'une gaine tubulaire, celle-ci par exemple peut reposer à sa partie haute par un moyen de retenue sur le bord supérieur de la cheminée située au dessus de la paroi supérieure de la cavité d'application, traverser la cavité d'application, puis la cheminée située au-dessous de la paroi inférieure de la cavité d'application. Une telle gaine est bien sûr réalisée en matériau perméable aux micro-ondes.

Pour un appareil dont la paroi inférieure comporte une pluralité d'ouvertures, chaque ouverture étant pourvue d'une cheminée, les cheminées peuvent être telles qu'elles comportent une chambre annulaire dans leur partie située au-dessous de la paroi inférieure de la cavité d'application, la chambre annulaire étant pourvue de moyens d'entrée et de sortie de fluide.

Selon une variante de réalisation l'appareil peut être tel que la paroi inférieure de la cavité d'application est, comme la paroi supérieure, constituée d'une zone périphérique annulaire solidaire de la paroi latérale et d'une zone centrale reliée à la zone centrale de la paroi supérieure.

Selon une autre variante, la paroi inférieure de la cavité d'application est indépendante de la paroi latérale et est solidaire de la paroi supérieure.

Afin de mieux diriger les micro-ondes vers les récipients, la cavité d'application, peut, selon un mode de réalisation de l'appareil objet de l'invention, comporter intérieurement des déflecteurs régulièrement répartis, sensiblement perpendiculaires aux parois supérieure et inférieure de la cavité d'application.

Les déflecteurs sont, bien entendu, réalisés en matériau non perméable aux micro-ondes.

Selon un mode de réalisation les déflecteurs sont sensiblement plans et rectangulaires, l'axe X de la cavité étant situé dans leurs plans. Selon ce mode de réalisation les déflecteurs sont disposés radialement dans la cavité d'application.

Selon un autre mode de réalisation, les déflecteurs sont des surfaces cylindriques de génératrice parallèle à l'axe X de la cavité d'application et disposés de façon telle que la face concave d'un déflecteur soit en regard de la face convexe du déflecteur adjacent, symétriquement par rapport à un plan de symétrie contenant l'axe d'un guide d'ondes et de la cavité d'application, les faces concaves étant tournées vers l'ouverture dans la paroi latérale de la cavité d'application du guide d'ondes correspondant.

Pour des appareils, objets de l'invention, dont les parois supérieure et inférieure sont solidaires de la paroi latérale ou comportant une zone annulaire solidaire de la paroi latérale les déflecteurs peuvent être solidaires des parois supérieures et/ou inférieure et/ou des zones annulaires.

Selon une variante de réalisation les déflecteurs sont solidaires de la paroi latérale de la cavité d'application des micro-ondes.

Un autre mode de réalisation des déflecteurs est plus particulièrement destiné à un appareil comportant un générateur de micro-ondes dont l'antenne est située dans la cavité d'application selon son axe X ou à un appareil qui comporte un guide d'ondes dont l'axe de symétrie Y est confondu avec l'axe X de la cavité d'application.

De tels déflecteurs sont constitués chacun par une paroi cylindrique de génératrice parallèle à l'axe X de la cavité d'application, ladite paroi enveloppant sensiblement chaque récipient et présentant une ouverture selon sa partie située vers la zone du récipient en regard de l'axe de la cavité d'application, deux déflecteurs adjacents étant reliés par une paroi de liaison, l'espace compris entre les déflecteurs, les parois de liaison et la paroi latérale de la cavité d'application étant comblé par un matériau imperméable aux micro-ondes.

Selon encore un autre mode de réalisation l'appareil, objet de l'invention peut être tel que les moyens pour émettre les micro-ondes n'émettent pas les micro-ondes directement dans la cavité d'application.

L'appareil est alors tel que les moyens pour émettre les micro-ondes émettent les micro-ondes dans une cavité secondaire située au dessous de la cavité d'application, la paroi située entre la cavité secondaire et la cavité d'application étant pourvue de fenêtres de couplage.

Avantageusement, les fenêtres de couplage sont situées, dans la paroi entre la cavité d'application et la cavité secondaire, à la verticale des récipients placés dans la cavité d'application.

Selon encore un autre mode de réalisation, l'appareil peut être tel que les moyens pour émettre les micro-ondes, émettent les micro-ondes dans une cavité secondaire circulaire, d'axe X, dont la paroi supérieure est pourvue d'une pluralité de fenêtres de couplage, disposées selon au moins un cercle, chaque fenêtre de couplage étant entourée d'une cheminée située au-dessus de la paroi supérieure de la cavité secondaire, l'espace intérieur de la cheminée formant une cavité d'application élémentaire des micro-ondes destinée à recevoir le récipient, les cheminées étant d'une hauteur H fonction de la fréquence d'émission des micro-ondes dans la cavité secondaire et de la section des fenêtres de couplage pour s'opposer à la propagation des micro-ondes hors des cavités élémentaires.

Selon encore un autre mode de réalisation, l'appareil peut comporter des moyens de contrôle de l'avancement des traitements. Les moyens de contrôle peuvent être constitués par des sondes de mesure placées dans chaque récipient au sein de l'échantillon, mesurant par exemple la conductivité de celui-ci.

L'appareil de traitement en milieu humide selon l'invention peut être commandé manuellement par un opérateur mettant en marche le chauffage par micro-ondes et/ou éventuellement manoeuvrant selon un cycle prédéterminé les différentes vannes et/ou les moyens de rotation.

De préférence, l'appareil comporte des moyens de commande, tels qu'un microprocesseur, de la mise en marche et de l'arrêt du chauffage par micro-ondes et éventuellement de l'ouverture et de la fermeture des différentes vannes et/ou des moyens de rotation.

Toutes les parties de l'appareil de traitement en milieu humide selon l'invention, susceptibles d'être en contact avec les échantillons sont avantageusement réalisées en matériau résistant bien à la corrosion, les réactifs éventuellement utilisés étant particulièrement agressifs et la température atteinte dans les récipients élevée. Comme matériau, le verre et le polytétrafluoroéthylène conviennent généralement bien.

L'appareil de traitement en milieu humide objet de la présente invention, est destiné à soumettre des échantillons contenus dans des récipients à des micro-ondes afin de les chauffer rapidement, ce chauffage ayant pour but d'effectuer une opération physique et/ou chimique sur l'échantillon.

L'appareil est particulièrement destiné à être utilisé pour réaliser des réactions chimiques en milieu humide sur les échantillons. Il est particulièrement destiné à des réactions telles que le traitement acide ou alcalin en milieu humide d'échantillons à des fins de dissolution, d'hydrolyse ou de minéralisation.

L'invention sera mieux comprise par la description des figures ci-jointes, qui représentent, à titre d'exemple, schématiquement, sans échelle déterminée, divers modes de réalisation de l'appareil objet de la présente invention. L'appareil sera décrit ci-après en se référant plus spécifiquement à un appareil de traitement en milieu humide d'échantillon, le traitement étant une réaction chimique.

La figure 1 est une vue générale externe schématique d'un mode de réalisation de l'appareil de traitement en milieu humide, selon l'invention.

La figure 2 est une vue partielle de détail de l'appareil selon la figure 1.

La figure 3 est une vue de détail, en coupe, de la périphérie de la paroi supérieure de la cavité d'application d'un appareil selon les figures 1 et 2, la paroi supérieure pouvant être animée d'un mouvement de rotation.

La figure 5 est une vue générale externe d'un appareil selon l'invention, comportant une cavité secondaire.

La figure 6 est une vue de détail en coupe d'une variante de raccordement d'un guide d'ondes à une cavité d'application.

La figure 7 est une vue de détail, en coupe par un plan vertical, d'un bouchon associé à une cheminée pour capter les produits gazeux de la réaction.

La figure 8 est une vue en coupe, par un plan vertical, d'un mode de réalisation d'une cheminée et d'un récipient.

La figure 9 est une vue en coupe, par un plan vertical, d'un autre mode de réalisation d'une cheminée et d'un récipient.

Les figures 10 et 11 sont des vues en coupe, par un plan vertical de deux variantes de réalisation d'une cheminée associée à une gaine et à un récipient.

La figure 12 est une vue de détail en coupe d'un mode de réalisation de l'appareil dans lequel chaque cheminée constitue une cavité d'application élémentaire.

La figure 13 est une vue générale externe d'un appareil de traitement en milieu humide, non objet de l'invention.

La figure 14 est une vue de détail, en coupe, de la périphérie de la cavité d'application d'un appareil selon la figure 13 dont la zone centrale de la paroi supérieure de la cavité d'application peut être animée d'un mouvement de rotation.

La figure 15 est une représentation schématique de détail d'un appareil, objet de l'invention, permettant de réaliser dans chaque récipient un traitement sur une succession d'échantillons.

La figure 16 est une vue en coupe par un plan vertical d'un récipient associé à deux cheminées selon un autre mode de réalisation de l'appareil objet de l'invention.

La figure 17 est une vue en coupe par un plan diamétral d'un mode de réalisation de l'appareil dans lequel les récipients sont des tubes.

Les figures 18 et 19 sont deux vues partielles schématiques en coupe de deux autres modes de réalisation de l'appareil objet de l'invention dont chaque récipient est un tube.

Les figures 20, 21, 22 sont des vues en coupe par un plan horizontal de trois modes de réalisation d'une cavité d'application pourvue de déflecteurs.

La figure 23 est schématiquement une vue d'ensemble d'un mode de réalisation d'un appareil comportant trois ensembles constitués par un générateur de micro-ondes émettant dans un guide d'ondes, dont la cavité d'application est de section hexagonale et qui comporte une zone centrale animée d'un mouvement de rotation.

La figure 24 est un schéma de principe d'un mode de réalisation des moyens pour animer les récipients d'un mouvement de rotation sur eux-mêmes.

La figure 25 est schématiquement, une vue d'ensemble d'un autre mode de réalisation d'un appareil, selon l'invention, comportant deux ensembles constitués par un générateur de micro-ondes émettant dans un guide d'ondes.

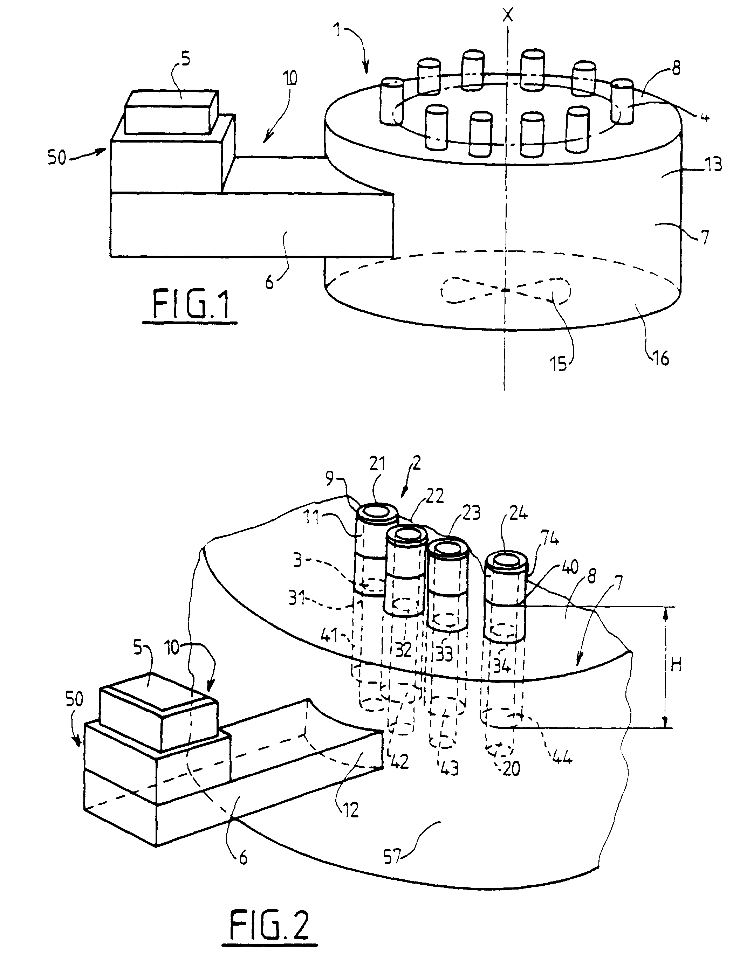

L'appareil de traitement (1), objet de l'invention, représenté schématiquement figure 1, est destiné à réaliser une réaction chimique en milieu humide, simultanément sur une pluralité d'échantillons, chaque réaction ayant lieu dans un récipient (2), non représenté figure 1, contenant l'échantillon et au moins un réactif, il sera appelé ci-après "appareil de réaction chimique".

L'appareil (1) comprend comme moyens (50) pour émettre des micro-ondes un ensemble (10) constitué par un générateur (5) de micro-ondes émettant dans un guide d'ondes (6) et une cavité d'application (7) des micro-ondes en liaison avec le guide d'ondes (6).

La cavité d'application (7) est, selon le présent mode de réalisation, un cylindre dont la directrice est un cercle et l'ensemble (10) est disposé de façon telle que le guide d'ondes (6) et la cavité d'application (7) admettent le même plan de symétrie vertical.

La cavité d'application (7) est délimitée par une paroi supérieure (8), une paroi inférieure (16) et une paroi latérale (13). Elle admet un axe X qui est selon le présent mode de réalisation orthogonal à la direction de déplacement des micro-ondes dans le guide d'ondes (6).

L'appareil (1), selon ce mode de réalisation, sera décrit en se référant également à la figure 2 qui est une vue partielle de l'appareil selon la figure 1 montrant quatre récipients (21 à 24) placés dans quatre ouvertures (31 à 34) de la paroi supérieure (8) de la cavité d'application (7).

L'appareil (1) représenté figure 1 permet d'introduire dix récipients (2) dans la cavité d'application (7).

Lors du fonctionnement de l'appareil (1), les récipients (21 à 24) contenant les échantillons et les réactifs sont introduits dans la cavité d'application (7) et leur chauffage est assuré par les micro-ondes émises par le générateur (5).

Les récipients (21 à 24) sont des éprouvettes portant un bourrelet (9) extérieur à la partie supérieure de leur col (11).

Afin d'introduire les récipients (21 à 24) dans la cavité d'application (7) la paroi supérieure (8) de celle-ci, présente une pluralité d'ouvertures (31 à 34), chaque ouverture (3) à une dimension telle qu'elle permet l'introduction d'un récipient (2) dans la cavité d'application (7).

Les ouvertures (31 à 34) dans la paroi supérieure (8) de la cavité d'application (7) sont disposées selon un cercle admettant comme axe l'axe X de la cavité d'application (7). Ainsi les ouvertures (31 à 34) sont disposées selon un cercle (figuré en trait mixte), de façon symétrique par rapport au plan de symétrie du guide d'ondes (6) et, dans le cas présent, de la cavité d'application (7).

Sur la figure 2 les récipients (2) ont été représentés tous identiques, on peut réaliser un appareil (1) destiné à recevoir des récipients (2) de dimensions différentes, dans ce cas les ouvertures (3) auront des dimensions adaptées aux dimensions des récipients. Toutefois la symétrie sera de préférence respectée dans le positionnement des récipients (2).

Chaque ouverture (3) est pourvue d'une cheminée (4), située à sa périphérie, d'une hauteur H, fonction de la fréquence d'émission des micro-ondes et de la section de passage de l'ouverture (3), pour former une barrière d'absorption s'opposant à la propagation des micro-ondes à l'extérieur de la cavité d'application (7). Les cheminées (41 à 44) sont tubulaires, de forme cylindrique et constituées par une tôle.

Selon le mode de réalisation représenté les cheminées (41 à 44) sont situées en partie dans la cavité d'application (7). Elles peuvent être formées de deux tronçons soudés l'un au dessus et l'autre au dessous de la paroi supérieure (8) de la cavité d'application (7) ou bien être monobloc la paroi supérieure (8) sera alors découpée pour mettre en place et souder les cheminées (41 à 44), les ouvertures (31 à 34) sont définies par les sections droites intérieures, situées dans le plan de la paroi supérieure (8) de la cavité d'application (7) des micro-ondes, des cheminées (41 à 44).

Les récipients (2) sont pourvus de cols (11) trop longs pour que le bourrelet (9) repose directement sur le bord supérieur (40) des cheminées (4), des entretoises (74) sont alors placées entre le bourrelet (9) des récipients (2) et le bord supérieur (40) des cheminées (4). Cependant, les entretoises (74) ne sont pas trop hautes afin que la partie (20) du récipient (2) contenant l'échantillon et le ou les réactifs, soit hors de la partie inférieure de la cheminée (4).

L'appareil de réaction chimique (1), objet de l'invention, comporte des moyens d'agitation (15) des micro-ondes constitués par un brasseur d'ondes tel qu'un ventilateur, ces moyens apportent une certaine homogénéité au champ de micro-ondes dans la cavité d'application (7).

Un appareil (1) selon le mode de réalisation décrit ci-avant, c'est-à-dire dont la cavité d'application (7) est cylindrique, peut être tel que la paroi supérieure (8) est animée d'un mouvement de rotation autour de l'axe X de la cavité d'application (7), la paroi supérieure (8) est indépendante de la paroi latérale (13) de la cavité d'application (7).

Dans un tel appareil (1) les récipients (2) se déplacent autour de l'axe de rotation X en décrivant un cercle et sont donc tous soumis aux mêmes conditions d'application des micro-ondes.

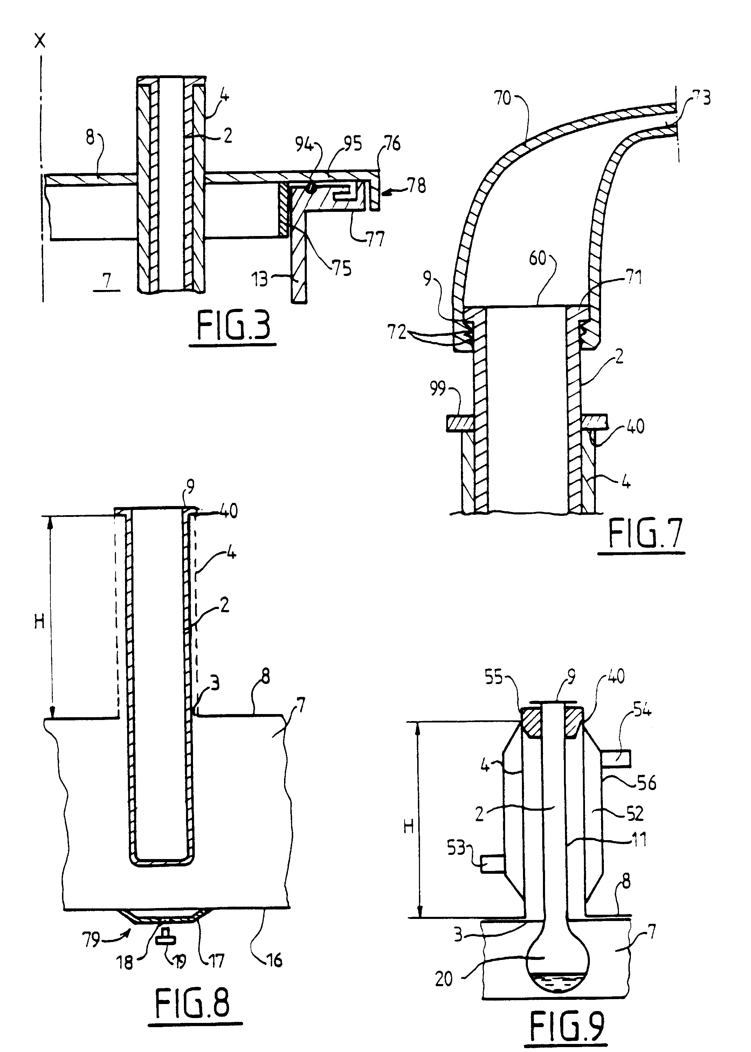

En se référant à la figure 3, la paroi supérieure (8) de la cavité d'application (7) est alors pourvue à sa périphérie d'une part, d'une virole (75) s'engageant dans la cavité d'application (7) et d'autre part, de moyens (76) qui coopèrent avec des moyens (77) portés par la paroi latérale (13) de la cavité d'application (7) pour constituer un piège quart d'ondes (78).

Afin de faciliter la rotation de la paroi supérieure (8) celle-ci repose sur la paroi latérale (13) par l'intermédiaire de billes (94) placées dans une rainure (95) située à la partie haute de la paroi latérale (13).

Si un appareil (1) tel que décrit ci-avant est destiné à la réalisation dans chaque récipient d'une réaction chimique sur une succession d'échantillons, comme cela sera décrit ci-après, la paroi inférieure (16) de la cavité d'application (7) et la partie basse de la paroi latérale (13) comportent également des moyens pour constituer un piège quart d'ondes, et, avantageusement, la paroi inférieure (16) est rendue solidaire de la paroi supérieure (8) par exemple à l'aide de membrures.

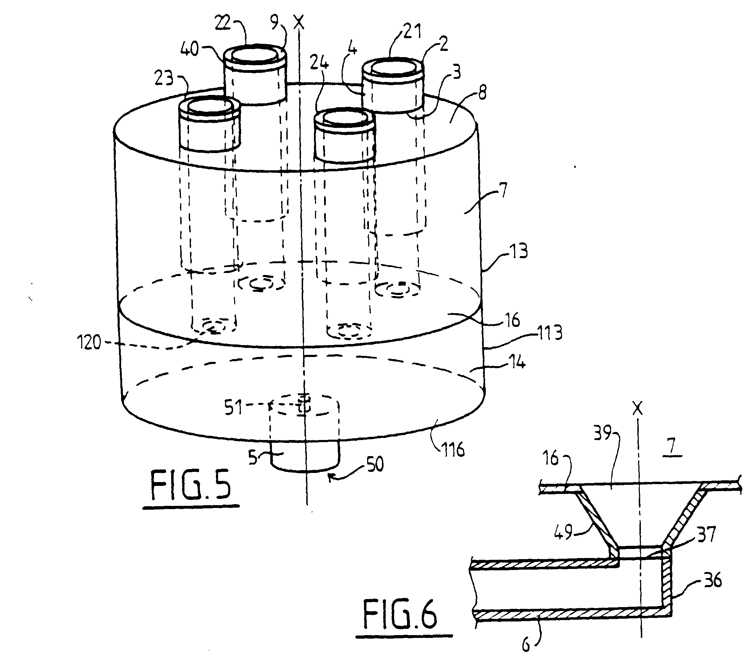

L'appareil de réaction chimique en milieu humide tel que représenté figure 5 comporte une cavité d'application (7) analogue à celle décrite précédemment et une cavité secondaire (14), située au-dessous de la cavité d'application (7). La cavité secondaire (14) est délimitée par une paroi inférieure (116), une paroi latérale (113), dans le prolongement de la paroi latérale (13) de la cavité d'application (7), et une paroi supérieure (16) qui est la paroi inférieure de la cavité d'application (7). La cavité secondaire (14) est donc cylindrique et admet le même axe X que la cavité d'application (7).

Les moyens (50) pour émettre des micro-ondes dans la cavité secondaire (14) sont constitués par un générateur (5) dont l'antenne (51) est située dans la cavité secondaire (14), selon l'axe X de celle-ci, le générateur (5) étant placé au-dessous de la paroi inférieure (116) de la cavité secondaire (14).

La paroi (16) entre la cavité secondaire (14) et la cavité d'application (7) est pourvue de fenêtres de couplage (120) situées à la verticale des récipients (2).

L'appareil (1), représenté figure 5, comporte quatre récipients (21 à 24) en forme d'éprouvette dont l'extrémité fermée est placée au voisinage de la paroi (16) au-dessus des fenêtres de couplage (120). Chaque récipient (2) pénêtre dans la cavité d'application (7) par une ouverture (3) munie d'une cheminée (4), et repose par son bourrelet (9) sur le bord supérieur (40) de la cheminée (4).

La figure 6 est une vue de détail en coupe du raccordement d'un guide d'ondes (6) à une cavité d'application (7), le guide d'ondes (6) amenant les micro-ondes au centre de la paroi inférieure (16) de la cavité d'application (7) par l'ouverture (39) de celle-ci, et étant selon le mode de réalisation représenté perpendiculaire à l'axe X de la cavité d'application (7). Le guide d'ondes (6) a son extrémité (36) fermée et présente une ouverture (37) sur sa paroi la plus proche de la cavité d'application (7) en correspondance avec l'ouverture (39) de la paroi inférieure (16). Entre l'ouverture (37) du guide d'ondes et l'ouverture (39) de la paroi inférieure (16) de la cavité d'application (7) est placé un cône de raccordement (49), divergeant vers la cavité d'application (7), soudé d'une part à la paroi inférieure (16) de la cavité d'application (7) et d'autre part à la paroi du guide d'ondes (6).

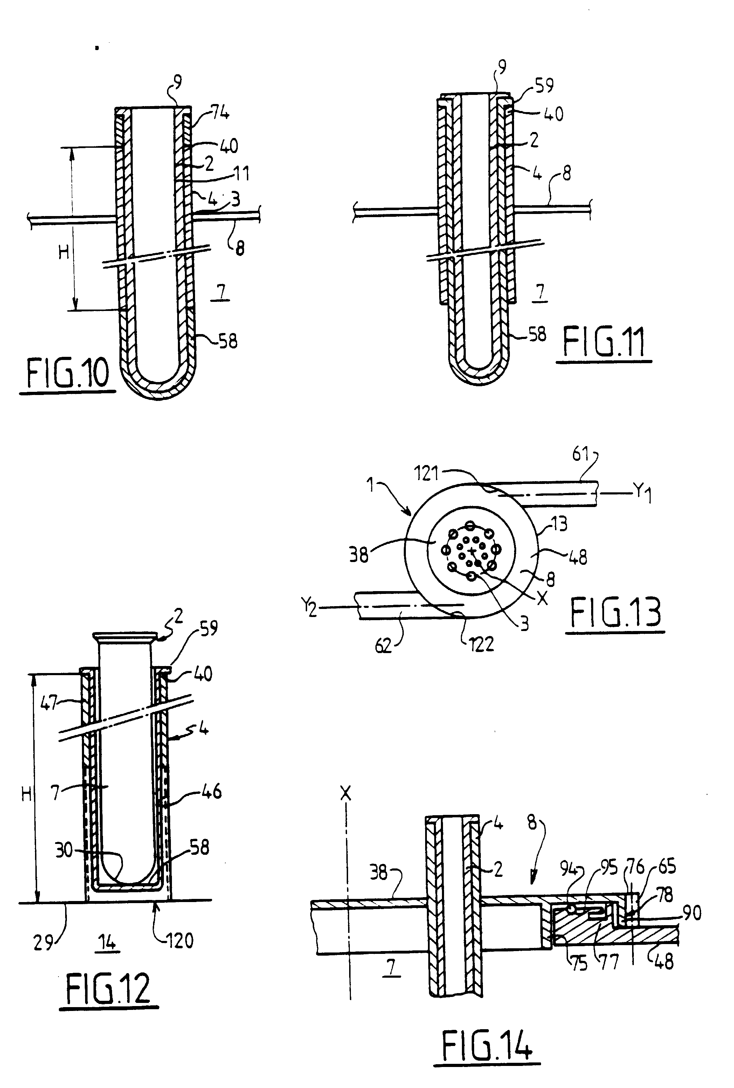

Afin de capter les fumées et/ou vapeurs produites par la réaction chimique, le récipient (2), dont la partie supérieure du col (11) est représentée figure 7, peut comporter un bouchon (70) adapté à l'ouverture (60) du récipient (2). Le bouchon (70) est réalisé en matériau élastique et s'adapte au récipient (2). Le bouchon (70) est maintenu par la coopération d'une collerette (71) située à l'extrémité supérieure du col (11) du récipient (2) et de deux nervures (72) situées sur la face interne du bouchon (70), les deux nervures (72) et la collerette (71) assurent l'étanchéité.

Le bouchon (70) comporte un conduit (73) d'évacuation des fumées et/ou vapeurs, qui peut être relié à des moyens d'aspiration et/ou de neutralisation.

Le col (11) du récipient (2) est pourvu extérieurement de deux oreilles (99), qui comme le bourrelet (9) précédemment décrit, sont destinées à s'appuyer sur le bord supérieur (40) de la cheminée (4).

Les récipients (2) ont été décrits ci-avant ouverts (par exemple figures 2 et 3) ou munis d'un bouchon (70) destiné au captage des fumées ou vapeurs émises (figure 7), ils peuvent aussi être pourvus d'un bouchon assurant une fermeture étanche du récipient, le récipient étant alors constitué de façon telle qu'il puisse supporter une pression interne.

Selon le mode de réalisation de la cheminée (4), représenté en coupe par un plan vertical figure 8, la cheminée (4) est réalisée en matériau conducteur mis sous forme discontinue, elle est ici constituée par un treillis métallique. La résistance du treillis métallique constituant la cheminée (4) est cependant déterminée pour présenter une résistance mécanique suffisante afin que la cheminée (4), outre sa fonction de barrière de propagation des micro-ondes, puisse assurer la fonction de support du récipient (2) par appui du bourrelet (9) extérieur sur le bord supérieur (40) de la cheminée (4).

La cheminée (4) est située à la périphérie de l'ouverture (3) de la paroi supérieure (8) de la cavité d'application (7). La cheminée (4) est toute située au dessus de la paroi supérieure (8) de la cavité d'application (7) et s'élève à une hauteur H choisie en fonction de la section de passage de l'ouverture (3) et de la fréquence d'émission des micro-ondes afin de constituer une barrière d'absorption s'opposant à la propagation des micro-ondes à l'extérieur de la cavité d'application (7).

Selon le mode de réalisation représenté, la cavité d'application (7) comporte, dans sa paroi inférieure (16) à l'aplomb de l'ouverture (3), donc, juste au dessous du récipient (2), un moyen d'évacuation (79) de tout produit susceptible d'être répandu dans la cavité d'application (7) par le bris du récipient (2). Le moyen d'évacuation (79) est, par exemple tel que représenté, constitué par une cuvette (17), réalisée par emboutissage de la paroi inférieure (16) ou rapportée par soudage, la cuvette (17) comportant un trou (18) d'évacuation dont le diamètre peut être calculé pour qu'il constitue lui-même une barrière anti-propagation des micro-ondes, ou bien un bouchon (19) peut être prévu pour obturer le trou (18).

La cuvette (17) peut aussi être démontable, l'homme de l'art prévoira bien entendu des moyens de piégeage des micro-ondes entre la cuvette (17) et la paroi inférieure (16) de la cavité d'application (7).

Selon le mode de réalisation de la cheminée (4), représenté en coupe par un plan vertical figure 9, la cheminée (4) est située toute au dessus de la paroi supérieure (8) de la cavité d'application (7), elle est réalisée en matériau conducteur de structure continue, elle est ici constituée par une tôle mise sous forme tubulaire et soudée à la périphérie de l'ouverture (3) à la paroi supérieure (8) de la cavité d'application (7). L'ouverture (3) est de section plus grande que celle du col (11) du récipient (2) afin de permettre le passage de la partie (20) renflée du récipient (2) destinée à contenir l'échantillon et le ou les réactifs.

La cheminée (4) est entourée par un manchon (56) délimitant une chambre annulaire (52). Le manchon (56) comporte deux tubulures (53, 54) constituant des moyens d'entrée et de sortie d'un fluide en circulation, permettant de réguler la température de la cheminée (4) et par là, la température du col (11) du récipient (2) en fonction de la réaction chimique exécutée dans le récipient (2). A titre d'exemple un refroidissement du col (11) du récipient (2) peut permettre la condensation des vapeurs émises par l'échantillon et le retour du condensat par gravité dans le récipient (2).

La hauteur H de la cheminée (4) est bien sûr choisie en fonction de la fréquence d'émission des micro-ondes dans la cavité d'application (7) et de la dimension de l'ouverture (3) dans la paroi supérieure (8) de la cavité d'application (7) afin d'arrêter la propagation des micro-ondes vers l'extérieur de l'appareil (1).

Selon le présent mode de réalisation, la section extérieure du col (11) du récipient (2) est inférieure à la section interne de la cheminée (4), afin de pouvoir maintenir le récipient (2) dans l'appareil (1) il est placé un adaptateur (55) entre la partie supérieure du col (11) et le bord supérieur (40) de la cheminée (4). L'adaptateur (55) est de forme tronconique afin de pouvoir s'engager et être maintenu dans la cheminée (11) et le bourrelet (9) extérieur du récipient (2) s'appuie sur l'adaptateur (55).

La cheminée (4), selon le mode de réalisation représenté, en coupe par un plan vertical, figure 10 est située à la fois au dessus et au dessous de la paroi supérieure (8) de la cavité d'application (7). La cheminée (4) est prolongée dans la cavité d'application (7) par une gaine (58), perméable aux micro-ondes, destinée à éviter la chute éventuelle de l'échantillon et de débris du récipient (2) dans la cavité d'application (7) lors du bris de celui-ci. Entre le bourrelet (9) extérieur du récipient (2) et le bord supérieur (40) de la cheminée (4) est intercalée une entretoise (74).

La hauteur H de la cheminée (4) est, bien entendu, choisie comme précédemment afin de constituer une barrière à la propagation des micro-ondes hors de la cavité d'application (7).

Selon le mode de réalisation représenté en coupe par un plan vertical figure 11, la cheminée (4) et la gaine (58) sont indépendantes. La gaine (58) repose par un moyen de retenue tel qu'un bourrelet (59) sur le bord supérieur (40) de la cheminée (4) et le récipient (2) repose par son bourrelet (9) sur le bourrelet (59) de la gaine (58).

L'appareil de réaction chimique (1) selon l'invention, dont seule une cheminée (4) est représentée en coupe figure 12, est tel que les micro-ondes sont émises dans une cavité secondaire (14) cylindrique, d'axe X, dont la paroi supérieure (29) est pourvue d'une pluralité de fenêtres de couplages (120) disposées selon au moins un cercle d'axe X, chaque fenêtre de couplage (120) étant entourée d'une cheminée (4), située au-dessus de la paroi supérieure (29) de la cavité secondaire (14), la cheminée (4) étant de forme cylindrique.

L'espace intérieur de la cheminée (4) forme une cavité d'application élémentaire (7) des micro-ondes destinée à recevoir le récipient (2).

La cheminée (4) selon le mode de réalisation représenté est constituée dans sa partie basse (46) par une structure discontinue, telle qu'une toile métallique et dans sa partie haute (47) par une structure continue telle qu'une tôle. Elle a une hauteur H fonction de la fréquence d'émission des micro-ondes dans la cavité secondaire (14) et de la section de la fenêtre de couplage (120) pour s'opposer à la propagation des micro-ondes hors des cavités élémentaires (7).

Dans la cheminée (4) est placée, comme décrit ci-avant, une gaine (58) qui repose par le bourrelet (59) sur le bord supérieur (40) de la cheminée (4). Selon ce mode de réalisation le récipient (2) repose par sa partie inférieure (30) sur le fond de la gaine (58) directement ou après intercalation d'un matériau d'amortissement des chocs.

L'appareil de réaction chimique (1) représenté schématiquement sur la figure 13 comporte une cavité d'application (7) cylindrique et deux ensembles constitués par un générateur (non représenté) émettant dans un guide d'ondes (61 ou 62). Les guides d'ondes (61, 62) sont disposés de façon telle que chaque guide d'ondes (61 ou 62) est perpendiculaire à un plan radial de la cavité d'application (7), et afin de conserver une certaine symétrie, les axes de symétrie (Y1, Y2) des guides d'ondes (61, 62) sont parallèles.

Les axes de symétrie (Y1, Y2) des guides d'ondes (61, 62) peuvent bien sûr être à la même altitude ou à des altitudes différentes. Les ouvertures (121, 122) des guides d'ondes (61, 62) dans la paroi latérale (13) de la cavité d'application (7) sont ainsi décalées.

L'appareil (1), est tel que la paroi supérieure (8) de la cavité d'application (7) est constituée d'une zone périphérique (48) annulaire solidaire de la paroi latérale (13) de la cavité d'application (7) et d'une zone centrale (38) comportant les ouvertures (3) qui sont ici réparties selon deux cercles concentriques. Les ouvertures (3) situées le plus près de l'axe X de la cavité d'application (7) ont un diamètre plus faible que celui des ouvertures (3) situées selon le cercle extérieur, ainsi des récipients (2) de diamètres différents peuvent être placés dans la cavité d'application (7). Les ouvertures (3) sont bien sûr munies de cheminées (non représentées) telles que définies ci-avant.

La zone centrale (38) de l'appareil (1), est de préférence amovible et constitue une sorte de panier portant les récipients. La zone centrale (38) et la zone périphérique (48) sont bien entendu pourvues de moyens constituant un piège quart d'ondes analogue à celui représenté figure 3.

Ainsi, en se référant à la figure 14, la zone centrale (38) de la paroi supérieure (8) de la cavité d'application (7) est pourvue à sa périphérie d'une virole (75) et de moyens (76) qui coopèrent avec des moyens (77) portés par la zone périphérique (48) de la paroi supérieure (8) pour constituer un piège quart d'ondes (78).

Afin de faciliter la rotation de la zone centrale (38) autour de l'axe X, la zone centrale (38) repose sur la zone périphérique (48) par l'intermédiaire de billes (94) placées dans une rainure (95) portée par la zone périphérique (48).

La denture (65) située sur la face latérale externe (90) du piège quart d'ondes (78) permet, grâce à une chaîne l'entraînement en rotation de la zone centrale (38).

Si un appareil (1) selon le mode de réalisation décrit ci-avant est destiné à la réalisation dans chaque récipient d'une réaction chimique sur une succession d'échantillons, la paroi inférieure de la cavité d'application (7) est également constituée d'une zone périphérique et d'une zone centrale analogues aux zones (48, 38) de la paroi supérieure. La zone centrale de la paroi inférieure (16) est alors rendue solidaire de la zone centrale (38) de la paroi supérieure (8) par exemple à l'aide de membrures.

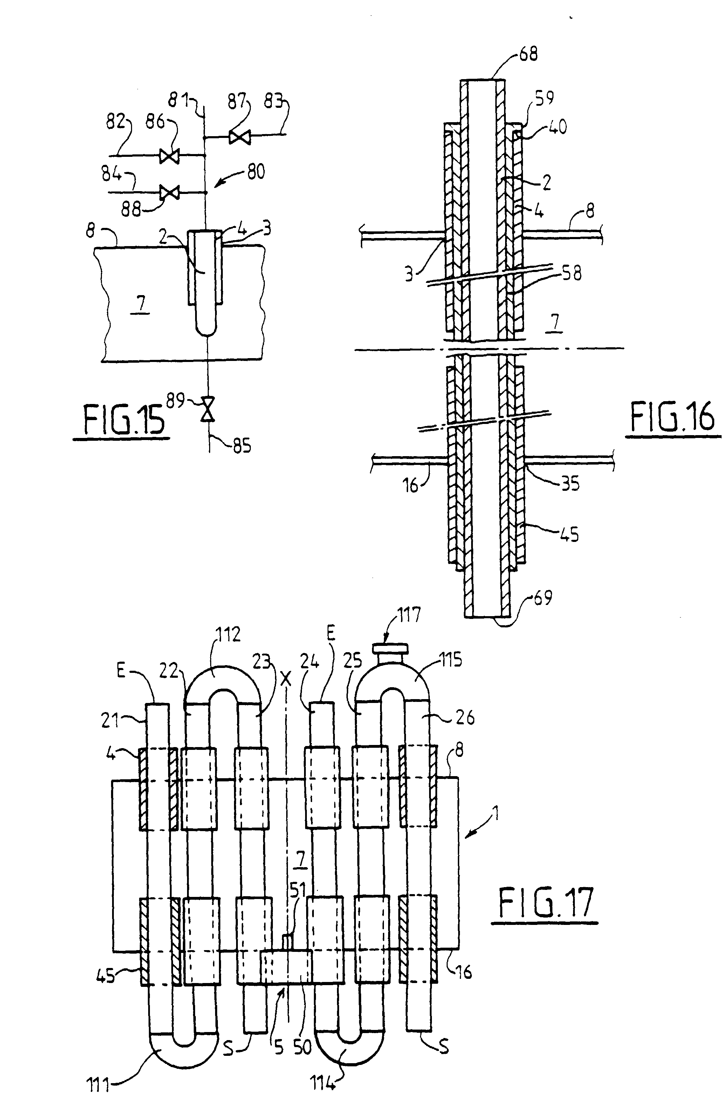

L'appareil de réaction chimique en milieu humide peut, selon une variante, permettre de réaliser dans chaque récipient (2) une réaction chimique sur une succession d'échantillons. La figure 15 est une vue de détail schématique d'un récipient (2) et d'une cheminée (4) placés dans une cavité d'application (7).

Dans un tel appareil, qui comporte une pluralité de récipients (2), chaque récipient (2) fait partie d'un circuit (80) comportant une chambre de traitement, constituée par ledit récipient (2), placée dans la cavité d'application (7). L'ouverture (3) de la paroi supérieure (8) de la cavité d'application (7) est bien sûr comme ci-avant pourvue d'une cheminée (4).

En se référant au sens de déplacement de l'échantillon dans le circuit (80), le circuit (80) comporte en amont de la chambre de traitement c'est-à-dire du récipient (2), un conduit (82) d'alimentation d'échantillons, un conduit (83) d'introduction d'au moins un réactif, et un conduit (84) d'alimentation de liquide de rinçage. En aval du récipient (2) le circuit (80) présente un conduit (85) de sortie du produit du traitement.

Le conduit (82) d'alimentation d'échantillons, le conduit (83) d'introduction d'au moins un réactif et le conduit (84) d'alimentation de liquide de rinçage sont respectivement munis de vannes (86, 87, 88).

Le conduit (83) d'introduction d'au moins un réactif peut introduire dans le circuit (80), un seul réactif ou successivement plusieurs réactifs ou encore un mélange d'au moins deux réactifs, selon les besoins de la réaction chimique.

Selon le présent mode de réalisation, le conduit (85) de sortie du produit du traitement est également muni d'une vanne (89). La vanne (89) est destinée à empêcher l'écoulement du produit hors du circuit (80) pendant le temps nécessaire à l'accomplissement de la réaction dans le récipient (2).

Le circuit (80) de l'appareil présente également un conduit appelé évent (81) destiné à mettre en communication l'espace intérieur du circuit (80) et l'atmosphère. L'évent (81) permet, notamment, aux gaz, nés de la réaction chimique, de s'échapper hors du circuit (80).

Le fonctionnement de l'appareil de réaction chimique selon ce mode de réalisation va être décrit brièvement en se référant à un seul circuit (80) comportant un seul récipient (2), le processus décrit ci-après étant identique pour chaque récipient (2) d'un circuit (80).

Le conduit (82) d'alimentation d'échantillons est relié à une source d'échantillons constituée par exemple par une ligne d'échantillonnage en provenance d'une installation. De même le conduit (84) d'alimentation de liquide de rinçage est relié à une source de liquide de rinçage.

Les vannes (86, 87, 88, 89) étant préalablement fermées, on ouvre la vanne (86) du conduit (82) d'alimentation d'échantillons et on alimente dans le circuit (80) une quantité prédéterminée d'échantillon [opération a], en amont du récipient (2), par exemple au moyen d'une pompe volumétrique. On referme alors la vanne (86).

On ouvre la vanne (87) du conduit (83) d'introduction d'un réactif et on introduit dans le circuit (80) la quantité souhaitée de réactif [opération b], par exemple au moyen d'une pompe volumétrique, puis on referme la vanne (87).

L'échantillon et le réactif sont donc présents dans le récipient (2). On met en fonctionnement, pendant un temps prédéterminé le générateur de micro-ondes et l'on chauffe ainsi le récipient (2) placé dans la cavité d'application (7) des micro-ondes [opération c].

On ouvre alors la vanne (89) et on récupère par le conduit de sortie (85) le produit du traitement [opération d], celui-ci sortant du circuit (80) sous l'effet de la gravité.

Quand tout le produit du traitement a été récupéré, on ouvre la vanne (88) du conduit (84) d'alimentation de liquide de rinçage et l'on rince le circuit, [opération e], le liquide de rinçage souillé sortant du circuit (80) par le conduit (85) est dirigé vers un bac de stockage d'effluents.

Le rinçage du circuit (80) étant terminé on ferme la vanne (88) du conduit (84) d'alimentation de liquide de rinçage puis la vanne (89) du conduit de sortie (85), le circuit (80) est prêt à recevoir un nouvel échantillon alimenté par le conduit (82) relié à la ligne d'échantillonnage et à réaliser une réaction chimique en milieu humide sur un nouvel échantillon en répétant les opérations a) à e) ci-avant.

Un tel appareil est avantageusement commandé par un microprocesseur.

Un appareil (1) tel que décrit ci-avant peut ne pas comporter de vanne (86) sur le conduit (82) d'alimentation de l'échantillon, ni de vanne (89) sur le conduit (85) de sortie du produit du traitement, les échantillons alimentés par le conduit (82) forment alors une succession d'échantillons séparés par des bulles de gaz, les échantillons et les bulles étant en écoulement selon un flux continu. Dans ce cas l'opération de rinçage (e) peut être réalisée lors du passage de la bulle de gaz dans le circuit.

La figure 16 est une vue de détail en coupe par un plan vertical d'un mode de réalisation de l'appareil objet de l'invention, destiné à réaliser une réaction chimique sur un flux continu d'échantillon. Selon ce mode de réalisation chaque récipient (2) de l'appareil (1) est constitué par un tube traversant la cavité d'application et ouvert à ses deux extrémités (68, 69), le récipient (2) peut ainsi être raccordé d'une part par son extrémité (68) à un conduit d'amenée de l'échantillon et éventuellement d'un ou plusieurs réactifs et d'autre part par son extrémité (69) à un conduit de sortie du produit du traitement.

Le récipient (2) pénètre dans la cavité d'application (7) par une ouverture (3) de la paroi supérieure (8) et ressort par une ouverture (35) de la paroi inférieure (16). Les ouvertures (3) et (35) sont bien sûr pourvues de cheminées (4) et (45) d'une hauteur H fonction de la fréquence des micro-ondes et de la section de passage des ouvertures (4, 45) pour former une barrière d'absorption des micro-ondes.

Le récipient (2) sous forme de tube est placé dans une gaine (58) ouverte à ses deux extrémités. A son extrémité supérieure la gaine (58) est pourvue d'un moyen de retenue (59) tel qu'un bourrelet par l'intermédiaire duquel elle repose sur le bord supérieur (40) de la cheminée (4). La gaine (58) enveloppe le récipient (2) du haut de la cheminée (4) jusqu'au bas de la cheminée (45) donc dans toute la traversée de la cavité d'application (7). Elle est bien sûr réalisée en matériau perméable aux micro-ondes.

L'appareil (1) représenté schématiquement figure 17 en coupe par un plan diamétral est un appareil (1) comportant douze récipients tubulaires (2), associés à des cheminées (4, 45) au voisinage des parois supérieure (8) et inférieure (16), tels que représentés figure 16.

La cavité d'application (7) des micro-ondes est bien entendu cylindrique d'axe X, les récipients sont disposés selon un cercle d'axe X, et les micro-ondes sont émises dans la cavité d'application (7) par des moyens (5) constitués d'un générateur (50) dont l'antenne (51) est située dans la cavité d'application (7) selon son axe X.

Cependant, selon le mode de réalisation représenté, les récipients (21, 22, 23) d'une part et les récipients (24, 25, 26) d'autre part sont reliés en série par respectivement les raccords (111, 112) et (114, 115). Le raccord (115) entre les récipients (25) et (26) comporte des moyens (117) d'introduction d'un réactif dans l'échantillon tranféré du récipient (25) au récipient (26).

Selon le mode de réalisation représenté, l'échantillon circule dans les récipients reliés en série sous l'effet de la pression d'alimentation du liquide des entrées E des récipients (21, 24) aux sorties S des récipients (23, 26).

Un tel appareil peut permettre comme l'appareil représenté figure 16 la réalisation d'une réaction chimique en milieu humide sur un flux continu d'échantillons.

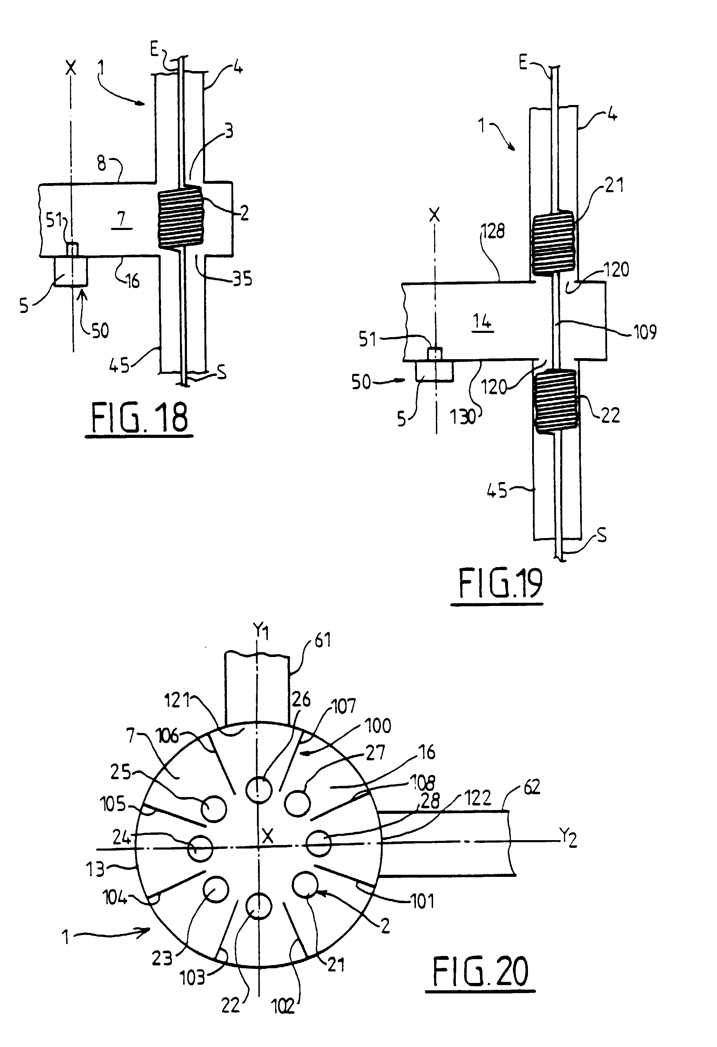

L'appareil (1) selon l'invention dont une vue partielle schématique est représentée figure 18 comporte plusieurs récipients (2) chaque récipient (2) étant constitué par un tube enroulé en hélice placé dans la cavité d'application (7). La cavité d'application (7) présente dans sa paroi supérieure (8) et dans sa paroi inférieure (16) des ouvertures (3, 35) pour le passage du récipient (2) à ces ouvertures (3, 35) sont bien sûr associées des cheminées (4, 45) telles que définies ci-avant.

Les moyens (50) pour émettre les micro-ondes dans la cavité d'application (7) sont constitués par un générateur (5) dont l'antenne (51) est située dans la cavité d'application (7) selon son axe X, la cavité d'application (7) étant cylindrique et la pluralité de récipients (2) disposés selon un cercle d'axe X.

Les récipients (2) ont leurs caractéristiques (diamètre interne, diamètre, pas et nombre de tours de l'hélice) qui ont été déterminés pour que le temps de séjour de l'échantillon et du ou des réactifs dans la cavité d'application (7) soit suffisant. Le récipient (2) comporte une tubulure d'entrée E pour l'échantillon et le ou les réactifs et une tubulure de sortie S pour le produit du traitement.

L'appareil (1) selon le mode de réalisation dont une vue partielle schématique est représentée figure 19 comporte une cavité secondaire (14) cylindrique, d'axe X, dont les parois supérieure (129) et inférieure (130) sont pourvues d'une pluralité de fenêtres de couplage (120) disposées selon au moins un cercle d'axe X, les fenêtres de couplage (120) des parois supérieure (129) et inférieure (130) étant placées l'une au-dessus de l'autre. Chaque fenêtre de couplage (120) est entourée d'une cheminée (4, 45), (4) pour la cheminée associée à la fenêtre de couplage (120) de la paroi supérieure (129), (45) pour la cheminée associée à la fenêtre de couplage (120) de la paroi inférieure (130). L'espace intérieur de chaque cheminée (4, 45) forme une cavité d'application élémentaire (7) des micro-ondes destinée à recevoir le récipient (21 ou 22).

Chaque récipient (21) ou (22) est constitué par un tube enroulé en hélice, deux récipients correspondants, (21) et (22) sont reliés directement en série par un conduit de liaison (109) traversant la cavité secondaire (14).

Les moyens (50) pour émettre les micro-ondes dans la cavité secondaire (14) sont constitués par un émetteur (5) dont l'antenne (51) est située dans la cavité secondaire (14) selon son axe X.

Les appareils objets de l'invention selon les modes de réalisation représentés figures 18 et 19 permettent la réalisation d'une réaction chimique sur un flux continu d'échantillons.

Les appareils selon les modes de réalisation représentés figures 16, 17, 18 et 19 permettent également simultanément la réalisation de réactions chimiques sur une succession d'échantillons, des échantillons de volume défini étant alimentés successivement dans les récipients avec interruption de l'alimentation entre deux échantillons successifs ou bien par alimentation d'échantillons séparés par des bulles de gaz et s'écoulant sous forme d'un flux continu dans les récipients.

Les appareils (1) selon les modes de réalisation représentés figures 20 à 22 en coupe par un plan horizontal, c'est-à-dire par un plan perpendiculaire à l'axe X de la cavité d'application (7) comportent des déflecteurs (100) régulièrement répartis et sensiblement perpendiculaires aux parois supérieure et inférieure (16) de la cavité d'application (7).

Sur les figures 20 à 22 seuls ont été représentés schématiquement les récipients (2), les cheminées et/ou les gaines n'ont pas été représentées.

L'appareil (1) représenté figure 20 comporte une cavité d'application (7) cylindrique, de directrice circulaire, et deux ensembles constitués par un générateur (non représenté) émettant dans un guide d'ondes (61 ou 62). Les guides d'ondes (61, 62) ont leurs axes (Y₁, Y₂) situés dans un même plan, perpendiculaires entre eux et à l'axe X de la cavité d'application (7) et sécants sur l'axe X. Ainsi les ouvertures (121, 122) des guides d'ondes (61, 62) dans la paroi latérale (13) de la cavité d'application (7) sont décalées.

L'appareil (1) comporte huit récipients (21 à 28) répartis régulièrement selon un cercle d'axe X.

Les déflecteurs (101 à 108), en matériau non perméables aux micro-ondes, sont sensiblement plans et rectangulaires, l'axe X de la cavité d'application (7) étant situé dans leur plan, ils sont disposés radialement et régulièrement répartis entre les récipients (21 à 28).

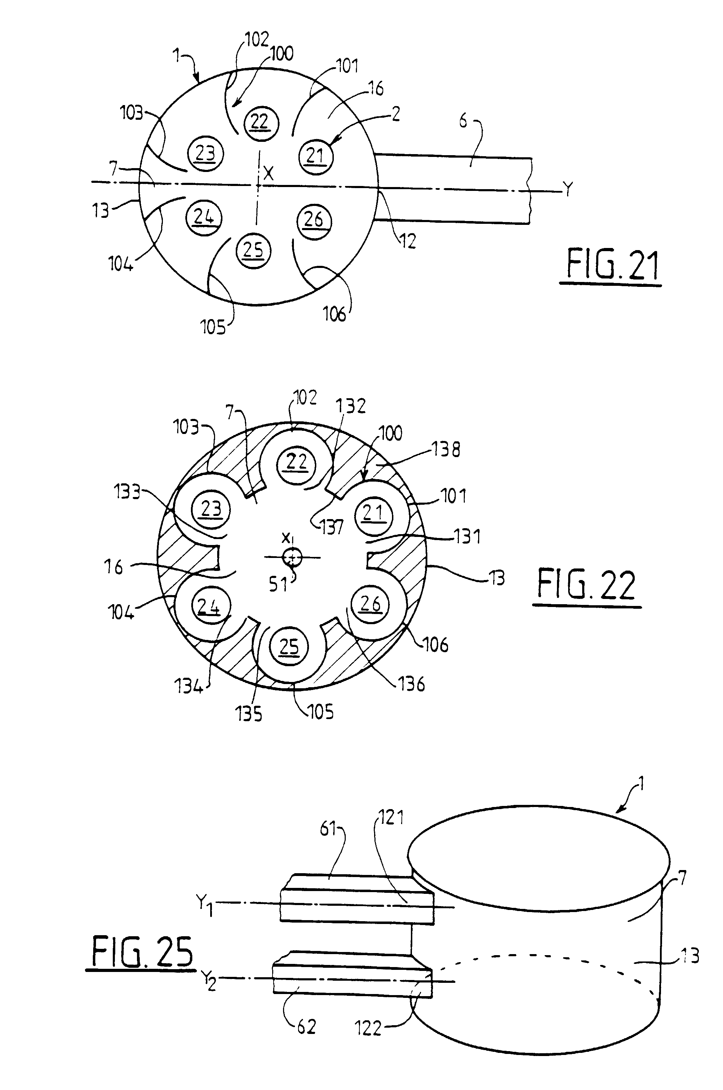

L'appareil (1) selon le mode de réalisation représenté figure 21 comporte une cavité d'application (7) cylindrique, de directrice circulaire, et un ensemble constitué par un générateur (non représenté) émettant dans un guide d'ondes (6), l'axe Y du guide d'ondes (6) est perpendiculaire et sécant de l'axe X de la cavité d'application (7).

L'appareil (1) comporte six déflecteurs (101 à 106) régulièrement répartis, entre les récipients (21 à 26) symétriquement par rapport à un plan vertical contenant l'axe Y du guide d'ondes (6) et l'axe X de la cavité d'application (7). Les déflecteurs (101 à 106) sont ici formés de surfaces cylindriques de génératrice parallèle à l'axe X de la cavité d'application (7), solidaires de la paroi latérale (13) de la cavité d'application (7).

Les déflecteurs (101 à 106) sont disposés symétriquement par rapport à un plan de symétrie contenant l'axe X de la cavité d'application (7) et l'axe Y de symétrie du guide d'ondes (6). D'un même côté du plan de symétrie les déflecteurs (101 à 103) ou (104 à 106) sont disposés de façon telle que la face concave d'un déflecteur (102) soit en regard de la face convexe du déflecteur adjacent (101). La face concave est tournée vers l'ouverture (12) du guide d'ondes (6) dans la paroi latérale (13) de la cavité d'application (7).

L'appareil (1) selon le mode de réalisation représenté figure 22 comporte une cavité d'application (7) cylindrique, de directrice circulaire dans laquelle les micro-ondes sont émises par un émetteur dont l'antenne (51) est située dans la cavité d'application (7) selon son axe X, l'émetteur étant placé au-dessous de la paroi inférieure (16) de la cavité d'application (7).

L'appareil (1) comporte six récipients (21 à 26) régulièrement répartis dans la cavité d'application (7) selon un cercle d'axe X.

Les déflecteurs (101 à 106) sont constitués chacun par une paroi cylindrique de génératrice parallèle à l'axe X de la cavité d'application (7), la paroi cylindrique du déflecteur (101 à 106) enveloppe sensiblement chaque récipient (21 à 26) et présente une ouverture (131 à 136) selon la partie de sa surface située vers la zone du récipient (21 à 26) en regard de l'axe X de la cavité d'application (7). Deux déflecteurs adjacents tels que par exemple (101, 102) sont réunis par une paroi de liaison (137). L'espace (138) compris entre les déflecteurs (101 à 106), les parois de liaison (137) et la paroi latérale (13) de la cavité d'application (7) est de préférence comblé par un matériau imperméable aux micro-ondes et de préférence isolant thermique.

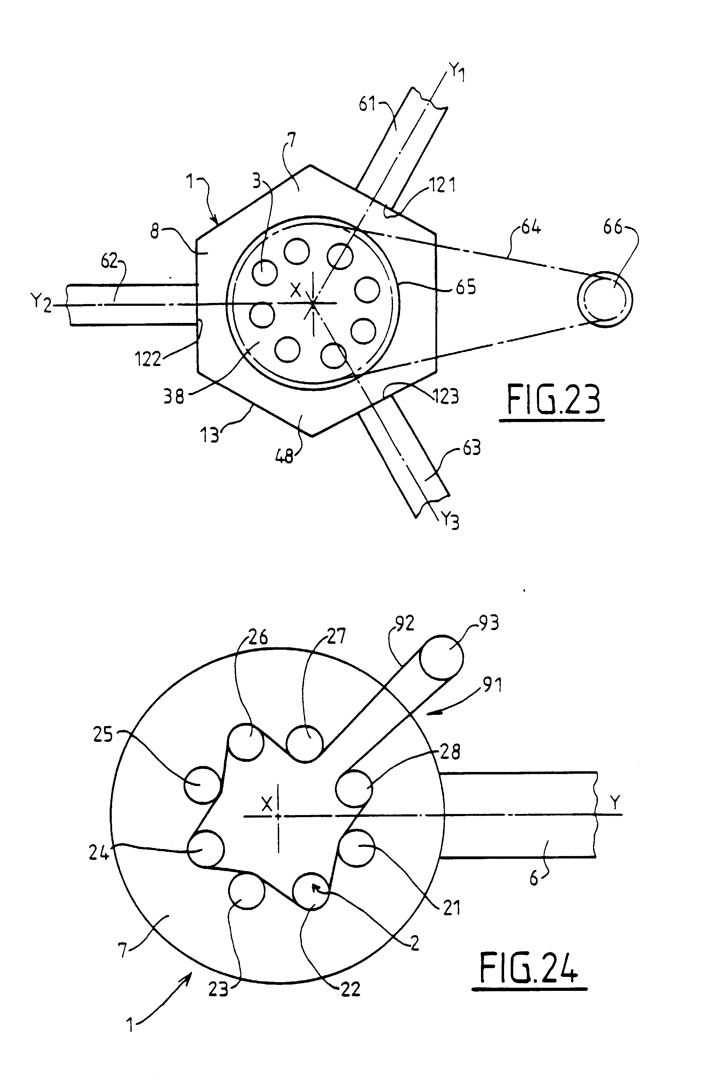

L'appareil de réaction chimique (1) selon le mode de réalisation représenté en vue de dessus figure 23 comporte une cavité d'application (7) qui est un cylindre dont la directrice est un hexagone régulier et trois ensembles constitués par un générateur (non représenté) émettant dans un guide d'ondes (61, 62 ou 63). Les guides d'ondes (61, 62, 63) sont régulièrement répartis, leurs axes (Y₁, Y₂, Y₃) sont perpendiculaires à l'axe X de la cavité d'application (7), situés dans un même plan horizontal et sécants sur l'axe X. Ainsi, par cette disposition les ouvertures (121, 122, 123) des guides d'ondes (61, 62, 63) dans la paroi latérale (13) de la cavité d'application (7) sont décalées, deux ouvertures ne pouvant être face à face.

La paroi supérieure (8) de la cavité d'application (7) est également constituée d'une zone périphérique (48) annulaire solidaire de la paroi latérale (13) et d'une zone centrale (38) comportant les ouvertures (3) réparties régulièrement selon un cercle. Les ouvertures (3) sont bien sûr pourvues de cheminées (non représentées).

La zone centrale (38) est circulaire et entraînée en rotation autour de l'axe X de la cavité au moyen d'une chaîne (64) entraînée en mouvement par un pignon (66) monté sur l'arbre d'un moteur. La chaîne (64) coopère avec une denture (65) située à la périphérie de la zone centrale (38) tel que représenté figure 14.

La figure 24 montre un schéma de principe d'un mode de réalisation des moyens (91) pour animer au moins un récipient (2) d'un mouvement de rotation sur lui-même autour d'un axe vertical, parallèle à l'axe X de la cavité d'application (7). Les cheminées ne sont pas représentées.

L'appareil (1) schématiquement représenté comporte une cavité d'application (7), un guide d'ondes (6) et huit récipients (21 à 28) disposés selon un cercle (figuré en trait mixte) symétriquement par rapport au plan vertical de symétrie du guide d'ondes (6).

Les récipients (21 à 28) sont selon ce mode de réalisation animés d'un mouvement de rotation sur eux-mêmes par entraînement direct par des moyens (91) constitués par une courroie (92) entraînée par une poulie (93) montée sur l'arbre de sortie d'un moteur tournant.

La courroie (92) entoure en partie les récipients (21 à 28) et les entraîne par friction en rotation sur eux-mêmes autour d'un axe vertical. Des récipients (2) tels que représentés figure 7 conviennent bien, la courroie (92) entourant leur col (11) entre les oreilles (99) et le bourrelet (9).

Pour des appareils dont le récipient est animé d'un mouvement de rotation sur lui-même par entraînement indirect, c'est-à-dire par entraînement en rotation de la gaine ou de la cheminée, les moyens (91) peuvent être analogues. Cependant si la cheminée est entraînée en rotation l'homme de l'art placera un piège à micro-ondes autour de la cheminée entre celle-ci et la paroi supérieure de la cavité d'application.

L'appareil de réaction chimique (1), représenté figure 25 comporte également une cavité d'application (7) cylindrique et deux ensembles constitués par un générateur (non représenté) émettant dans un guide d'ondes (61 ou 62). Pour chaque ensemble, le guide d'ondes (61 ou 62) et la cavité d'application (7) admettent le même plan de symétrie vertical. Selon le présent mode de réalisation les axes (Y1, Y2) de symétrie des guides d'ondes (61, 62) sont situés à des altitudes différentes et dans le même plan vertical afin que les ouvertures (121, 122) des guides d'ondes (61, 62) dans la paroi latérale (13) de la cavité d'application (7) soient décalées.

L'invention n'est pas limitée aux modes de réalisation représentés et décrits ci-avant et l'on peut, sans sortir du cadre de la présente invention combiner entre elles les diverses variantes décrites.

Font également partie de l'invention d'autres variantes ou modes de réalisation à la portée de l'homme de l'art.

L'appareil de traitement en milieu humide objet de l'invention présente de nombreux avantages.

L'un des principaux avantages est qu'il permet de réaliser un traitement en milieu humide simultanément dans les mêmes conditions de température et de temps sur plusieurs échantillons, tout en étant de manipulation aisée pour l'opérateur.

L'appareil de traitement objet de l'invention décrit ci-avant est destiné à réaliser un traitement chimique et/ou physique en milieu humide simultanément sur une pluralité d'échantillons, chaque traitement ayant lieu dans un récipient contenant un échantillon et éventuellement au moins un réactif.

L'appareil selon l'invention peut être utilisé pour réaliser des opérations de séparation par chauffage sur des mélanges solide/liquide ou liquide/liquide. Ces opération de séparation simultanément sur une pluralité d'échantillons sont réalisées de façon telle que chaque opération de séparation a lieu dans un récipient contenant le mélange solide/liquide ou liquide/liquide. Ainsi par la mise en oeuvre de l'appareil, objet de l'invention, on peut, par exemple, obtenir l'extrait sec d'un mélange solide/liquide.

L'appareil objet de l'invention est aussi destiné à réaliser des réactions chimiques très diverses. Il est particulièrement destiné à réaliser des réactions chimiques telles que le traitement acide ou alcalin en milieu humide d'échantillons à des fins de dissolution, d'hydrolyse ou de minéralisation.

## Revendications

1. Appareil (1) de traitement en milieu humide simultanément sur une pluralité d'échantillons, chaque traitement ayant lieu dans un récipient (2) contenant un échantillon, comprenant une cavité d'application (7) de micro-ondes et des moyens (50) pour émettre des micro-ondes dans ladite cavité, caractérisé en ce que :
- la cavité d'application (7) est un cylindre délimité par une paroi supérieure (8), une paroi inférieure (16), une paroi latérale (13), et admettant un axe X,
- les moyens (50) pour émettre des micro-ondes dans la cavité d'application (7) des micro-ondes comprennent au moins un ensemble (10) formé d'un générateur (5) de micro-ondes émettant dans un guide d'ondes (6 ; 61, 62 ; 61, 62, 63), le guide d'ondes étant en liaison avec la cavité d'application (7), et admettant un axe longitudinal (Y ; Y₁, Y₂ ; Y_{1,} Y_{2,} Y₃) parallèle à la direction de déplacement des micro-ondes dans le guide d'ondes (6 ; 61, 62 ; 61, 62, 63), chaque ensemble (10) étant disposé de façon telle que le guide d'ondes (6 ; 61, 62 ; 61, 62, 63) et la cavité d'application (7) admettent le même plan de symétrie vertical,
- et en ce que ledit appareil comprend des ouvertures (3) prévues dans la paroi supérieure (8) de la cavité d'application (7), lesdites ouvertures étant disposées selon au moins un cercle admettant comme axe l'axe X de la cavité d'application (7), chaque ouverture (3) ayant une dimension telle qu'elle permet l'introduction d'un récipient (2) dans la cavité d'application (7), chaque ouverture (3) étant pourvue d'une cheminée (4) d'une hauteur H fonction de la fréquence d'émission des micro-ondes et de la section de passage de l'ouverture (3), pour former une barrière d'absorption s'opposant à la propagation des micro-ondes à l'extérieur de la cavité d'application (7).

2. Appareil (1) selon la revendication 1, caractérisé en ce qu'il est prévu une pluralité d'ensembles (10) constitués chacun par un générateur de micro-ondes (5) émettant dans un guide d'ondes (61, 62 ; 61, 62, 63), lesdits ensembles (10) étant disposés, par rapport à la cavité d'application (7) des micro-ondes de façon telle que les axes de symétrie (Y₁, Y₂ ; Y₁, Y₂, Y₃) des guides d'ondes (61, 62 ; 61, 62, 63) orthogonaux à l'axe X de la cavité d'application (7) soient situés dans un même plan et soient sécants ou parallèles ou situés à des altitudes différentes et parallèles afin que les ouvertures (121, 122) des guides d'ondes (61, 62) dans la paroi latérale (13) de la cavité d'application (7) soient décalées.

3. Appareil selon l'une des revendications 1 ou 2, caractérisé en ce que les guides d'ondes (6) présentent un axe de symétrie Y parallèle et/ou orthogonal à l'axe X de la cavité d'application (7).

4. Appareil selon l'une quelconque des revendications précédentes caractérisé en ce que les ouvertures (3) dans la paroi supérieure (8) de la cavité d'application (7), sont disposées de façon symétrique par rapport au plan de symétrie du guide d'ondes (6 ; 61, 62) de chaque ensemble (10) et de la cavité d'application (7).

5. Appareil selon l'une quelconque des revendications précédentes caractérisé en ce que la paroi supérieure (8) de la cavité d'application (7) est constituée d'une zone périphérique (48) annulaire solidaire de la paroi latérale (13) et d'une zone centrale (38) amovible comportant les ouvertures (3).

6. Appareil selon la revendication 5, caractérisé en ce que la zone centrale (38) est animée d'un mouvement de rotation.

7. Appareil selon l'une quelconque des revendications 1 à 4 caractérisé en ce que la paroi supérieure (8) de la cavité d'application (7) est indépendante de la paroi latérale (13) et est animée d'un mouvement de rotation autour de l'axe X de la cavité d'application (7).

8. Appareil selon l'une quelconque des revendications précédentes caractérisé en ce qu'il comporte des moyens (91) pour animer au moins un récipient (2) d'un mouvement de rotation sur lui même autour d'un axe parallèle à l'axe X de la cavité d'application (7).

9. Appareil selon l'une quelconque des revendications précédentes caractérisé en ce que, afin de réaliser dans chaque récipient (2) un traitement en milieu humide sur une succession d'échantillons, chaque récipient (2) fait partie d'un circuit (80) comportant une chambre de traitement constituée par le récipient (2), et en se référant au sens de déplacement de l'échantillon dans le circuit (80), en amont de la chambre de traitement (2) un conduit (82) d'alimentation d'échantillon, éventuellement un conduit (83) d'introduction d'au moins un liquide, un conduit (84) d'alimentation de liquide de rinçage, et, en aval de la chambre de traitement (2), un conduit de sortie (85) du produit du traitement, chaque conduit étant muni d'une vanne (86, 87, 88, 89).

10. Appareil selon la revendication 9, caractérisé en ce que le récipient (2) est constitué par un tube ouvert à ses deux extrémités (68, 69) et que la paroi inférieure (16) de la cavité d'application (7) comporte en outre une pluralité d'ouvertures (35) pour le passage des récipients (2), chaque ouverture (35) étant pourvue d'une cheminée (45) d'une hauteur H fonction de la fréquence d'émission des micro-ondes et de la section de passage de l'ouverture (35) pour former une barrière d'absorption des micro-ondes.

11. Appareil selon l'une quelconque des revendications 9 ou 10 caractérisé en ce que la paroi inférieure (16) de la cavité d'application (7) est indépendante de la paroi latérale (13) et est solidaire de la paroi supérieure (8).

12. Appareil selon l'une quelconque des revendications 9 ou 10 caractérisé en ce que la paroi inférieure (16) de la cavité d'application (7) est constituée d'une zone périphérique annulaire solidaire de la paroi latérale (13) et d'une zone centrale reliée à la zone centrale (38) de la paroi supérieure (8).

13. Appareil selon l'une quelconque des revendications précédentes caractérisé en ce que la cavité d'application (7) comporte intérieurement des déflecteurs (100) régulièrement répartis, sensiblement perpendiculaires aux parois supérieure (8) et inférieure (16) de la cavité d'application (7).

14. Appareil selon la revendication 13, caractérisé en ce que les déflecteurs (101 à 106) sont des surfaces cylindriques de génératrice parallèle à l'axe X de la cavité d'application (7) et disposés de façon telle que la face concave d'un déflecteur (102) soit en regard de la face convexe du déflecteur (101) adjacent, symétriquement par rapport à un plan de symétrie contenant l'axe d'un guide d'ondes (6) et de la cavité d'application (7) les faces concaves étant tournées vers l'ouverture (120) dans la paroi latérale (13) de la cavité d'application (7) du guide d'ondes (6) correspondant.

15. Appareil selon la revendication 13, caractérisé en ce que les déflecteurs (101 à 106) sont constitués chacun par une paroi cylindrique de génératrice parallèle à l'axe X de la cavité d'application (7), ladite paroi enveloppant sensiblement chaque récipient (21 à 26) et présentant une ouverture (131 à 136) selon la partie de sa surface située vers la zone du récipient (21 à 26) en regard de l'axe X de la cavité d'application (7), deux déflecteurs adjacents (101, 102) étant reliés par une paroi de liaison (137), l'espace (138) compris entre les déflecteurs (101, 102), les parois de liaison (137) et la paroi latérale (13) de la cavité d'application (7) étant comblé par un matériau imperméable aux micro-ondes.

16. Appareil selon l'une quelconque des revendications précédentes caractérisé en ce que les moyens (50) pour émettre les micro-ondes émettent les micro-ondes dans une cavité secondaire (14) située au-dessous de la cavité d'application (7), la paroi située entre la cavité secondaire (14) et la cavité d'application (7) étant pourvue de fenêtres de couplage (120).

17. Appareil selon l'une quelconque des revendications 1 à 16 caractérisé en ce que les moyens (50) pour émettre les micro-ondes, émettent les micro-ondes dans une cavité secondaire (14) circulaire, d'axe X, dont la paroi supérieure (129) est pourvue d'une pluralité de fenêtres de couplage (120), disposées selon au moins un cercle, chaque fenêtre de couplage (120) étant entourée d'une cheminée (4) située au-dessus de la paroi supérieure (29) de la cavité secondaire (14), l'espace intérieur de la cheminée (4) formant une cavité d'application élémentaire (7) des micro-ondes destinée à recevoir le récipient (2), les cheminées (4) étant d'une hauteur H fonction de la fréquence d'émission des micro-ondes dans la cavité secondaire (14) et de la section des fenêtres de couplage (120) pour s'opposer à la propagation des micro-ondes hors des cavités élémentaires (7).

18. Appareil selon la revendication 17, caractérisé en que la paroi inférieure (130) de la cavité secondaire (14) comporte également des fenêtres de couplage (120) auxquelles sont associées des cheminées (45), l'espace intérieur des cheminées (4, 45) formant des cavités d'application élémentaires destinées à recevoir les+ récipients (21, 22) reliés en série par un conduit de liaison (109).

19. Utilisation de l'appareil de traitement en milieu humide (1) selon l'une quelconque des revendications 1 à 18 pour réaliser des réactions chimiques telles que le traitement acide ou alcalin en milieu humide d'échantillons à des fins de dissolution, d'hydrolyse ou de minéralisation.

## Patentansprüche

1. Vorrichtung (1) zur gleichzeitigen Naßbehandlung einer Vielzahl von Proben, wobei jede Behandlung in einem Behälter (2) erfolgt, der eine Probe enthält und die Vorrichtung einen Hohlraum (7) zur Anwendung von Mikrowellen sowie eine Einrichtung (50) zum Aussenden von Mikrowellen in diesen Hohlraum aufweist, dadurch gekennzeichnet, daß
- der Anwendungs-Hohlraum (7), der ein durch eine obere Wand (8), eine untere Wand (16) und eine Seitenwand (13) begrenzter Zylinder mit einer Achse X ist,
- die Einrichtung (50) zum Aussenden von Mikrowellen in den Mikrowellen-Anwendungs-Hohlraum (7) zumindest eine Baugruppe (10) mit einem Mikrowellen-Generator (5) umfaßt, der die Mikrowellen in einen Wellenleiter (6 ; 61, 62; 61, 62 63) aussendet, wobei der Wellenleiter mit dem Anwendungs-Hohlraum (7) in Verbindung steht und eine Längsachse (Y; Y₁, Y₂; Y_{1,} Y₂, Y₃) parallel zur Ausbreitungsrichtung der Mikrowellen im Wellenleiter (6 ; 61, 62; 61, 62 63) aufweist sowie jede Baugruppe (10) derart angeordnet ist, daß der Wellenleiter (6 ; 61, 62; 61, 62 63) und der Anwendungs-Hohlraum (7) die gleiche senkrechte Symmetrieebene haben,
und dadurch, daß die Vorrichtung in der oberen Wand (8) des Anwendungs-Hohlraumes (7) vorgesehene Öffnungen (3) aufweist und diese Öffnungen auf mindesten einem Kreisbogen um die Achse X des Anwendungs-Hohlraumes (7) angeordnet sind, wobei jede Öffnung eine solche Abmessung hat, daß sie das Einsetzen eines Behälters (2) in den Anwendungs-Hohlraum (7) gestattet und jede Öffnung (3) mit einem Schacht (4) versehen ist, dessen Höhe H eine Funktion der Sendefrequenz der Mikrowellen und des Durchlaßquerschnittes der Öffnung (3) ist, um eine Absorptionssperre gegen den Austritt von Mikrowellen aus dem Anwendungs-Hohlraum (7) nach außen zu bilden.

2. Vorrichtung (1) nach Anspruch 1, dadurch gekennzeichnet, daß sie mit einer Vielzahl von Baugruppen (10) versehen ist, deren jede durch einen Mikrowellen-Generator (5) gebildet wird, der die Mikrowellen in einen Wellenleiter (6 ; 61, 62; 61, 62 63) aussendet, wobei die Baugruppen (10) in bezug auf den Mikrowellen-Anwendungs-Hohlraum (7) derart angeordnet sind, daß die senkrecht zur Achse X des Anwendungs-Hohlraumes (7) verlaufenden Symmetrieachsen (Y; Y₁, Y₂; Y₁, Y₂, Y₃) der Wellenleiter (6 ; 61, 62; 61, 62 63) in der gleichen Ebene liegen und sich schneiden, parallel verlaufen oder in unterschiedlichen Höhen parallel angeordnet sind, damit die Öffnungen (121, 122) der Wellenleiter (61, 62) in der Seitenwand (13) des Anwendungs-Hohlraumes (7) versetzt angeordnet sind.

3. Vorrichtung nach einem der Ansprüche 1 oder 2, dadurch gekennzeichnet, daß die Wellenleiter (6) eine Symmetrieachse Y parallel und/oder senkrecht zur Achse X des Anwendungs-Hohlraumes (7) aufweisen.

4. Vorichtung nach einem der vorhergehenden Ansprüche, dadurch gekennzeichnet, daß die Öffnungen (3) in der oberen Wand (8) des Anwendungs-Hohlraumes (7) in bezug auf die Symmetrieebene der Wellenleiter (6; 61, 62) einer jeden Baugruppe (10) und des Anwendungs-Hohlraumes (7) symmetrisch angeordnet sind.

5. Vorrichtung nach einem der vorhergehenden Ansprüche, dadurch gekennzeichnet, daß die obere Wand (8) des Anwendungs-Hohlraumes (7) aus einem ringförmigen, fest mit der Seitenwand (13) verbundenen Umfangsbereich (48) und aus einem abnehmbaren Zentralbereich (38) mit den Öffnungen (3) besteht.

6. Vorrichtung nach Anspruch 5, dadurch gekennzeichnet, daß der Zentralbereich (38) in eine Drehbewegung versetzbar ist.

7. Vorrichtung nach einem der Ansprüche 1 bis 4, dadurch gekennzeichnet, daß die obere Wand (8) des Anwendungs-Hohlraumes (7) von der Seitenwand (13) unabhängig und in eine Drehbewegung um die Achse X des Anwendungs-Hohlraumes (7) versetzbar ist.

8. Vorrichtung nach einem der vorhergehenden Ansprüche, dadurch gekennzeichnet, daß sie eine Einrichtung (91) aufweist, um mindestens einen Behälter (2) in eine Drehbewegung um seine eigene, zur Achse X des Anwendungs-Hohlraumes (7) parallele Achse zu versetzen.

9. Vorrichtung nach einem der vorhergehenden Ansprüche, dadurch gekennzeichnet, daß zur Realisierung einer Naßbehandlung einer Folge von Proben in jedem Behälter (2) jeder dieser Behälter (2) Bestandteil eines Kreislaufes (80) mit einer durch den Behälter (2) gebildeten Behandlungskammer ist und daß im Sinne der Verschiebung der Probe im Kreislauf (80) stromaufwärts von der Behandlungskammer (2) eine ProbenEinfüll-Leitung (82), eventuell eine Leitung (83) zum Einleiten mindestens einer Flüssigkeit und eine Leitung (84) zum Einfüllen einer Spülflüssigkeit sowie stromabwärts von der Behandlungskammer (2) eine Auslaß-Leitung (85) für das Produkt der Behandlung angeordnet sind und jede dieser Leitungen mit einem Absperrschieber (86, 87, 88, 89) versehen ist.

10. Vorrichtung nach Anspruch 9, dadurch gekennzeichnet, daß der Behälter (2) aus einem an seinen beiden Enden (68, 69) offenen Rohr besteht und daß die untere Wand des Anwendungs-Hohlraumes (7) unter anderem eine Vielzahl von Öffnungen (35) für den Durchlaß der Behälter (2) aufweist, wobei jede Öffnung (35) mit einem Schacht (45) versehen ist, dessen Höhe H eine Funktion der Sendefrequenz der Mikrowellen und des Durchlaßquerschnittes der Öffnung (35) ist, um eine Absorptionssperre für die Mikrowellen zu bilden.

11. Vorrichtung nach einem der Ansprüche 9 oder 10, dadurch gekennzeichnet, daß die untere Wand (16) des Anwendungs-Hohlraumes (7) unabhängig von der Seitenwand (13) und mit der oberen Wand (8) verbunden ist.

12. Vorrichtung nach einem der Ansprüche 9 oder 10, dadurch gekennzeichnet, daß die untere Wand (16) des Anwendungs-Hohlraumes (7) aus einem ringförmigen, fest mit der Seitenwand (13) verbundenen Umfangsbereich und aus einem fest mit dem Zentralbereich (38) der oberen Wand (8) verbundenen Zentralbereich besteht.

13. Vorrichtung nach einem der vorhergehenden Ansprüche , dadurch gekennzeichnet, daß der Anwendungs-Hohlraum (7) innen gleichmäßig verteilte Ablenkplatten (100) aufweist, die genau senkrecht zur oberen und unteren Wand (8 bzw. 16) des Anwendungs-Hohlraumes (7) angeordnet sind.

14. Vorrichtung nach Anspruch 13, dadurch gekennzeichnet, daß die Ablenkplatten (101 bis 106) Zylinderflächen sind, deren Erzeugende parallel zur Achse X des Anwendungs-Hohlraumes (7) verläuft und die derart angeordnet sind, daß die konkave Seite einer Ablenkplatte (102) in bezug zur konvexen Fläche der benachbarten Ablenkplatte (101) symmetrisch zu einer Symmetrieebene angeordnet ist, welche durch die Achse eines Wellenleiters (6) und des Anwendungs-Hohlraumes (7) verläuft, wobei die konkaven Seiten der Öffnung (120) des entsprechenden Wellenleiters (6) in der Seitenwand (13) des Anwendungs-Hohlraumes (7) zugewandt sind.

15. Vorrichtung nach Anspruch 13, dadurch gekennzeichnet, daß die Ablenkplatten (101 bis 106) jeweils von einer Zylinderwand gebildet werden, deren Erzeugende parallel zur Achse X des Anwendungs-Hohlraumes (7) verläuft, wobei diese Wand jeden Behälter (21 bis 26) genau umhüllt und eine Öffnung (131 bis 136) entsprechend dem der Achse X des Anwendungs-Hohlraumes (7) zugewandten Bereich des Behälters (21 bis 26) aufweist, zwei benachbarte Ablenkplatten (101, 102) durch eine Verbindungswand (137) verbunden sind und der Raum (138) zwischen den Ablenkplatten (101, 102), der Verbindungswand (137) und der Seitenwand (13) des Anwendungs-Hohlraumes (7) mit einem für Mikrowellen undurchlässigen Material ausgefüllt ist.

16. Vorrichtung nach einem der vorhergehenden Ansprüche, dadurch gekennzeichnet, daß die Einrichtung (50) zum Aussenden von Mikrowellen dieselben in einen Sekundär-Hohlraum (14) aussendet, welcher unter dem Anwendungs-Hohlraum (7) gelegen ist, wobei die Wand zwischen dem Sekundär-Hohlraum (14) und dem Anwendungs-Hohlraum (7) mit Koppelfenstern (120) versehen ist.

17. Vorrichtung nach einem der Ansprüche 1 bis 16, dadurch gekennzeichnet, daß die Einrichtung (50) zum Aussenden von Mikrowellen dieselben in einen runden Sekundär-Hohlraum (14) mit der Achse X aussendet, dessen obere Wand (129) mit einer Vielzahl von Koppelfenstern (120) versehen ist, die in mindestens einem Kreisbogen angeordnet sind, wobei jedes Koppelfenster (120) von einem Schacht (4) umgeben ist, der über der oberen Wand (29) des Sekundär-Hohlraumes (14) angeordnet ist, und der Innenraum des Schachtes (4) einen Elementar-Mikrowellen-Anwendungs-Hohlraum (7) zur Aufnahme des Behälters (2) bildet, wobei die Schächte (4) eine solche Höhe H als Funktion der Sendefrequenz der Mikrowellen im Sekundär-Hohlraum (14) sowie des Querschnittes der Koppelfenster (120) haben, daß die Ausbreitung der Mikrowellen über die Elementar-Hohlräume (7) hinaus verhindert wird.

18. Vorrichtung nach Anspruch 17, dadurch gekennzeichnet, daß die untere Wand (130) des Sekundär-Hohlraumes (14) ebenfalls Koppelfenster (120) aufweist, an welche Schächte (45) angesetzt sind, wobei die Innenräume der Schächte (4, 45) Elementar-Anwendungs-Hohlräume zur Aufnahme der durch eine Verbindungsleitung (109) in Reihe geschalteten Behälter (21, 22) bilden.

19. Verwendung des Vorrichtung (1) zur Naßbehandlung nach einem der Ansprüche 1 bis 18 zur Durchführung chemischer Reaktionen, wie Säure- und Laugenbehandlung von Proben in nasser Umgebung zur Auflösung, Hydrolyse oder Mineralisation.

## Claims

1. Apparatus (1) for simultaneous treatment, in a moist medium, on a plurality of samples, each treatment taking place in a receptacle (2) containing one sample, comprising a microwave application cavity (7) and means (50) for emitting microwaves into the said cavity, characterised in that the application cavity (7) is a cylinder delimited by an upper wall (8), a lower wall (16) and a lateral wall (13), and admitting an axis X,
- the means (50) for emitting microwaves into the microwave application cavity (7) comprise at least one assembly (10) formed by a microwave generator (5) emitting into a waveguide (6; 61, 62; 61, 62, 63), the waveguide being in communication with the application cavity (7) and admitting a longitudinal axis (Y; Y₁, Y₂; Y₁, Y₂, Y₃) parallel to the direction of movement of the microwaves in the waveguide (6; 61, 62; 61, 62, 63), each assembly (10) being arranged in such a way that the waveguide (6; 61, 62; 61, 62, 63) and the application cavity (7) admit the same plane of vertical symmetry,
- and in that the said apparatus comprises apertures (3) provided in the upper wall (8) of the application cavity (7), the said apertures being arranged in at least one circle admitting as its axis the X axis of the application cavity (7), each aperture (3) having dimensions such as to permit the introduction of a receptacle (2) into the application cavity (7), each aperture (3) being provided with a chimney (4) of height H, which is a function of the emission frequency of the microwaves and of the cross-sectional access area of the aperture (3), in order to form an absorption barrier opposing the propagation of the microwaves to the exterior of the application cavity (7).

2. Apparatus (1) according to Claim 1, characterised in that a plurality of assemblies (10) are provided, each constituted by a microwave generator (5) emitting into a waveguide (61, 62; 61, 62, 63), the said assemblies (10) being arranged, with respect to the application cavity (7) of the microwaves, in such a way that the axes of symmetry (Y₁, Y₂; Y₁, Y₂, Y₃) of the waveguides (61, 62; 61, 62, 63) orthogonal to the axis X of the application cavity (7) are situated in a single plane and form secants or are parallel, or are situated at different altitudes and parallel, so that the apertures (121, 122) of the waveguides (61, 62) in the lateral wall (13) of the application cavity (7) are offset.

3. Apparatus according to either of Claims 1 and 2, characterised in that the waveguides (6) have an axis of symmetry Y parallel and/or orthogonal to the axis X of the application cavity (7).

4. Apparatus according to any one of the preceding claims, characterised in that the apertures (3) in the upper wall (8) of the application cavity (7), are arranged symmetrically with respect to the plane of symmetry of the waveguide (6; 61, 62) of each assembly and of the application cavity (7).

5. Apparatus according to any one of the preceding claims, characterised in that the upper wall (8) of the application cavity (7) is constituted by an annular, peripheral area (48), integral with the lateral wall (13), and by a movable, central area (38) comprising the apertures (3).

6. Apparatus according to Claim 5, characterised in that the central area (38) is made to move in rotation.

7. Apparatus according to any one of Claims 1 to 4, characterised in that the upper wall (8) of the application cavity (7) is independent of the lateral wall (13) and is made to move in rotation around the axis X of the application cavity (7).

8. Apparatus according to any one of the preceding claims, characterised in that it comprises means (91) for making at least one receptacle (2) move in rotation on itself, around an axis parallel to the axis X of the application cavity (7).

9. Apparatus according to any one of the preceding claims, characterised in that, in order to carry out, in each receptacle (2), treatment in a moist medium on a succession of samples, each receptacle (2) forms part of a loop (80) comprising a treatment chamber constituted by the receptacle (2), and, referring to the direction of movement of the sample in the loop (80), upstream from the treatment chamber (2), a sample feed conduit (82) possibly an inlet conduit (83) for at least one liquid, a feed conduit (84) for rinsing liquid, and, downstream from the treatment chamber (2), an outlet conduit (85) for the product of the treatment, each conduit being fitted with a valve (86, 87, 88, 89).

10. Apparatus according to Claim 9, characterised in that the receptacle (2) is constituted by a tube open at its two ends (68, 69) and in that the lower wall (16) of the application cavity (7) comprises in addition a plurality of apertures (35) for the passage of the receptacles (2), each aperture (35) being provided with a chimney (45) of height H which is a function of the emission frequency of the microwaves and of the cross-sectional access area of the aperture (35), in order to form an absorption barrier for the microwaves.

11. Apparatus according to either of Claims 9 or 10, characterised in that the lower wall (16) of the application cavity (7) is independent of the lateral wall (13) and is integral with the upper wall (8).

12. Apparatus according to either of Claims 9 or 10, characterised in that the lower wall (16) of the application cavity (7) is constituted by an annular, peripheral area, integral with the lateral wall (13), and by a central area connected to the central area (38) of the upper wall (8).

13. Apparatus according to any one of the preceding claims, characterised in that the application cavity (7) comprises, internally, deflectors (100), regularly distributed and substantially perpendicular to the upper (8) and lower (16) walls of the application cavity (7).

14. Apparatus according to Claim 13, characterised in that the deflectors (101 to 106) are cylindrical surfaces of generatrix parallel to the axis X of the application cavity (7), and arranged in such a way that the concave face of one deflector (102) is opposite the convex face of the adjacent deflector (101), symmetrically with respect to a plane of symmetry containing the axis of a waveguide (6) and of the application cavity (7), the concave faces being turned towards the aperture (120) in the lateral wall (13) of the application cavity (7) of the corresponding waveguide (6).

15. Apparatus according to Claim 13, characterised in that the deflectors (101 to 106) are each constituted by a cylindrical wall of generatrix parallel to the axis X of the application cavity (7), the said wall substantially enveloping each receptacle (21 to 26) and having an aperture (131 to 136) along the part of its surface situated towards the area of the receptacle (21 to 26) opposite the axis X of the application cavity (7), two adjacent deflectors (101, 102) being linked by a linking wall (137), the space (138) contained between the deflectors (101, 102), the linking walls (137) and the lateral wall (13) of the application cavity (7) being filled by a material impermeable to the microwaves.

16. Apparatus according to any one of the preceding claims, characterised in that the means (50) for emitting the microwaves emit the microwaves into a secondary cavity (14) situated below the application cavity (7), the wall situated between the secondary cavity (14) and the application cavity (7) being provided with coupling windows (120).

17. Apparatus according to one of Claims 1 to 16, characterised in that the means (50) for emitting the microwaves emit the microwaves into a circular, secondary cavity (14), of axis X, whose upper wall (129) is provided with a plurality of coupling windows (120) arranged around at least one circle, each coupling window (120) being surrounded by a chimney (4) situated above the upper wall (29) of the secondary cavity (14), the internal space of the chimney (4) forming an elementary application cavity (7) of the microwaves intended to receive the receptacle (2), the chimneys (4) being of height H which is a function of the emission frequency of the microwaves into the secondary cavity (14) and of the cross-section of the coupling windows (120) in order to oppose the propagation of microwaves out of the elementary cavities (7).

18. Apparatus according to Claim 17, characterised in that the lower wall (130) of the secondary cavity (14) also comprises coupling windows (120) with which are associated chimneys (45), the internal space of the chimneys (4, 45) forming elementary application cavities intended to receive the receptacles (21, 22) linked in series by a linking conduit (109).

19. Utilisation of the apparatus for treatment in a moist medium (1) according to any one of Claims 1 to 18, in order to carry out chemical reactions such as the acidic or alkaline treatment, in a moist medium, of samples, with the aims of dissolution, hydrolysis or mineralisation.
